# EUROPEAN PATENT APPLICATION

(11) **EP 4 752 446 A1**
(43) Date of publication of application: **03.06.2026**
(21) Application number: 24917574.6
(22) Date of filing: 24.12.2024
(51) Int. Cl.: F24F 3/14, B01D 53/26, F24F 3/153

(54) **DESICCANT WHEEL AND ROTARY DESICCANT DEHUMIDIFIER**

(30) Priority: 16.10.2024 CN 202422501396 U
(71) Applicant: Contemporary Amperex Technology Co., Limited, Ningde, Fujian 352100 (CN)
(72) Inventor: WU, Guidong, Ningde, Fujian 352100 (CN); ZHOU, Li, Ningde, Fujian 352100 (CN); ZHONG, Dabin, Ningde, Fujian 352100 (CN)
(74) Representative: Gong, Jinping
(86) International application number: PCT/CN2024/141913
(87) International publication number: WO 2026/081347

(57) **Abstract**

This application discloses a dehumidification rotor and a rotary dehumidification device, and relates to the field of air conditioning technology. The dehumidification rotor has a moisture absorption zone and a regeneration zone arranged along a circumferential direction of the dehumidification rotor, where a regeneration temperature of the regeneration zone varies along the circumferential direction of the dehumidification rotor. The technical solution of this application can reduce energy consumption during regeneration of the dehumidification rotor.

## Description

### CROSS-REFERENCE TO RELATED APPLICATIONS

This application claims priority to Chinese Patent Application No. 202422501396.X, filed on October 16, 2024, the entire content of which is incorporated herein by reference.

### TECHNICAL FIELD

This application relates to the field of air handling technology, and in particular, to a dehumidification rotor and a rotary dehumidification device.

### BACKGROUND

To meet the requirements of production processes, the relative humidity in the production workshops for multiple processes in a battery factory needs to be controlled to satisfy ambient humidity management requirements. In related technologies, a rotary dehumidification device can be utilized to introduce outdoor fresh air, dehumidify the fresh air, and discharge the dehumidified air indoors.

The rotary dehumidification device employs a dehumidification rotor as a core dehumidification structure. The dehumidification rotor is divided into a moisture absorption zone and a regeneration zone. Through rotation of the dehumidification rotor, each region of the dehumidification rotor cycles alternately between the moisture absorption zone and the regeneration zone. A portion of the rotor in the moisture absorption zone is configured to adsorb moisture from the fresh air to implement dehumidification, while a portion of the rotor rotated to the regeneration zone can be dried by hot air for dehydration regeneration. Currently, the energy consumption for regeneration of the dehumidification rotor is relatively high.

### SUMMARY

This application is intended to provide a dehumidification rotor and a rotary dehumidification device to reduce energy consumption during regeneration of the dehumidification rotor.

To achieve the above objective, the dehumidification rotor proposed in this application has a moisture absorption zone and a regeneration zone arranged along a circumferential direction of the dehumidification rotor, where a regeneration temperature of the regeneration zone varies along the circumferential direction of the dehumidification rotor.

In the technical solution of this application, the dehumidification rotor has a moisture absorption zone and a regeneration zone. Through rotation of the dehumidification rotor, each region of the dehumidification rotor cycles alternately between the moisture absorption zone and the regeneration zone. A portion of the rotor in the moisture absorption zone dehumidifies airflow passing through the moisture absorption zone, while a portion of the rotor rotated to the regeneration zone is dried by hot air for dehydration regeneration. The regeneration temperatures at different positions of the regeneration zone vary, allowing for heating of only some regions of the regeneration zone a high-temperature state. This eliminates the need to heat the entire regeneration zone to a high temperature, thereby reducing energy consumption during the regeneration process of the dehumidification rotor.

According to some embodiments of this application, the regeneration zone includes multiple regeneration treatment zones arranged along the circumferential direction, where along a rotation direction of the dehumidification rotor, regeneration temperatures of the multiple regeneration treatment zones are set in a decreasing manner.

This arrangement allows each regeneration treatment zone to first undergo high-temperature treatment to remove most of the moisture from a surface layer and cause moisture in an inner layer of the dehumidification rotor to move to the surface layer. When the regeneration treatment zone rotates to a lower-temperature region, since the inner-layer moisture has already moved to the surface layer, drying at a relatively low temperature can still effectively remove moisture to implement regeneration. Additionally, since the regeneration treatment zone downstream in the rotation direction has a lower temperature, the region rotated to the moisture absorption zone after regeneration also has a relatively low temperature. This reduces a temperature difference between the moisture absorption zone and the to-be-dehumidified airflow flowing toward the moisture absorption zone, thereby minimizing thermal offset between the moisture absorption zone and the to-be-dehumidified airflow and reducing energy waste.

According to some embodiments of this application, the dehumidification rotor includes a first surface and a second surface arranged back to back along an axial direction of the dehumidification rotor, where along a direction from the first surface to the second surface, pore sizes of mesopores of the dehumidification rotor are set in a decreasing manner; and
an air inlet end of the moisture absorption zone is located at the first surface, and an air inlet end of the regeneration zone is located at the second surface.

This arrangement allows airflow to first pass through a layer with larger mesopores near the first surface during dehumidification of the airflow. Due to the larger mesopores, a specific surface area is increased, enabling more moisture in the airflow to be adsorbed in the layer near the first surface. As the airflow gradually flows to the second surface, the airflow passes through a layer with smaller mesopores, allowing smaller water molecules in the airflow to be adsorbed by the dehumidification rotor, enhancing the moisture absorption effect. During regeneration treatment of the regeneration zone, regeneration air first comes into contact with the layer with smaller mesopores for heat exchange, causing moisture in this layer to move to a surface layer region with larger mesopores. Since dehydration is less difficult in the surface layer region, even if the temperature of the regeneration air decreases after the regeneration air passes through the previous layer, the moisture in the surface layer region can still be sufficiently removed, implementing effective dehydration regeneration of the first regeneration zone.

According to some embodiments of this application, the dehumidification rotor includes a first adsorption layer and a second adsorption layer arranged in a stacked manner, where mesopores of the first adsorption layer are larger than mesopores of the second adsorption layer, and a thickness of the first adsorption layer is greater than a thickness of the second adsorption layer.

This arrangement allows the dehumidification rotor to be formed by stacking adsorption layers with different mesopore sizes, facilitating preparation. Additionally, the thickness of the adsorption layer with smaller mesopores, which has greater dehydration difficulty, is set to be relatively small, reducing the regeneration difficulty of the dehumidification rotor and reducing energy consumption for regeneration of the dehumidification rotor.

This application further provides a rotary dehumidification device including:
a dehumidification passage;
a regeneration passage, where the regeneration passage is branched to include multiple primary regeneration pipelines; and
a dehumidification module, where the dehumidification module includes a rotatably arranged primary dehumidification rotor, the primary dehumidification rotor has a first moisture absorption zone and a first regeneration zone arranged along a circumferential direction of the primary dehumidification rotor, the first moisture absorption zone is located in the dehumidification passage, and the first regeneration zone is provided with multiple first regeneration treatment zones along the circumferential direction of the primary dehumidification rotor; where
the multiple primary regeneration pipelines are in one-to-one correspondence with the multiple first regeneration treatment zones, and regeneration air temperatures of at least two of the primary regeneration pipelines are different.

In the technical solution of this application, the regeneration passage used for rotor regeneration in the rotary dehumidification device is branched to include multiple primary regeneration pipelines, where each primary regeneration pipeline passes through one first regeneration treatment zone. During regeneration treatment of the first regeneration zone, as the primary dehumidification rotor rotates, each first regeneration treatment zone sequentially passes through each primary regeneration pipeline, allowing multiple dehumidification treatments to enhance the regeneration effect. The regeneration air temperatures in the primary regeneration pipelines are different, allowing for heating of regeneration air in only some of the primary regeneration pipelines to a high-temperature state. This eliminates the need for all regions of the regeneration zone to be dried and regenerated with high-temperature regeneration air, thereby reducing energy consumption during the regeneration process of the dehumidification rotor.

According to some embodiments of this application, along a rotation direction of the primary dehumidification rotor, regeneration air temperatures of the multiple primary regeneration pipelines are set in a decreasing manner.

With this arrangement, during regeneration treatment of the first regeneration zone, as the primary dehumidification rotor rotates, a regeneration treatment zone in the first regeneration zone first rotates to correspond to a primary regeneration pipeline with a relatively high airflow temperature, so as to be dehumidified with the high-temperature airflow to remove most of the moisture and cause moisture near an air inlet end of the first regeneration zone to be transferred to a surface layer region near an air outlet end. Subsequently, the first regeneration treatment zone rotates to correspond to a primary regeneration pipeline with a relatively low airflow temperature, so as to be further dehumidified. Since the moisture has already moved to the surface layer under the action of the upstream high-temperature airflow, drying at a relatively low temperature can still effectively remove moisture to implement regeneration. This arrangement requires only localized heating of the first regeneration zone to a high-temperature state, reducing energy consumption for regeneration of the first regeneration zone. Additionally, since the airflow temperature downstream in the rotation direction is relatively low, the temperature of the regenerated rotor is also relatively low. When the regenerated rotor rotates to the first moisture absorption zone, the temperature difference with the airflow in the dehumidification passage is also reduced, minimizing thermal offset between the first moisture absorption zone and the airflow and reducing energy waste.

According to some embodiments of this application, the primary dehumidification rotor has a first surface and a second surface arranged back to back along an axial direction of the primary dehumidification rotor; along a direction from the first surface to the second surface, mesopores of the primary dehumidification rotor are set in a decreasing manner; and
an air inlet end of the first moisture absorption zone is located at the first surface, and an air inlet end of the first regeneration zone is located at the second surface.

With this arrangement, during dehumidification of airflow, the airflow first passes through a layer with larger mesopores near the first surface. Due to the larger mesopores, a specific surface area is increased, enabling more moisture in the airflow to be adsorbed in the layer near the first surface. As the airflow gradually flows to the second surface, the airflow passes through a layer with smaller mesopores, allowing smaller water molecules in the airflow to be adsorbed by the primary dehumidification rotor, enhancing the moisture absorption effect. During regeneration treatment of the first regeneration zone, regeneration air first comes into contact with the layer with smaller mesopores for heat exchange, causing moisture in this layer to move to a surface layer region with larger mesopores. Since dehydration is less difficult in the surface layer region, even if the temperature of the regeneration air decreases after the regeneration air passes through the previous layer, the moisture in the surface layer region can still be sufficiently removed, implementing effective dehydration regeneration of the first regeneration zone.

According to some embodiments of this application, the primary dehumidification rotor includes a first adsorption layer and a second adsorption layer arranged in a stacked manner, where mesopores of the first adsorption layer are larger than mesopores of the second adsorption layer, and a thickness of the first adsorption layer is greater than a thickness of the second adsorption layer.

This arrangement allows the primary dehumidification rotor to be formed by stacking adsorption layers with different mesopore sizes, facilitating preparation. Additionally, the thickness of the adsorption layer with smaller mesopores, which has greater dehydration difficulty, is set to be relatively small, reducing the regeneration difficulty of the primary dehumidification rotor and reducing energy consumption for regeneration of the primary dehumidification rotor.

According to some embodiments of this application, the rotary dehumidification device further includes a first process air passage, where two ends of the first process air passage are respectively in communication with the dehumidification passage and the regeneration passage; and
a connection position of the first process air passage and the regeneration passage is located upstream of the first regeneration zone to guide part of process air from the dehumidification passage into the regeneration passage.

This arrangement introduces part of the process air from the dehumidification passage into the regeneration passage as regeneration air, increasing the volume of the regeneration air and improving the utilization of the process air.

According to some embodiments of this application, the dehumidification passage includes a first connection position located upstream of the first moisture absorption zone, where the first process air passage is connected to the first connection position. This arrangement allows part of the process air in the dehumidification passage to be guided from upstream of the primary dehumidification rotor to the regeneration passage as regeneration air.

According to some embodiments of this application, the dehumidification module further includes a secondary dehumidification rotor, where the secondary dehumidification rotor has a second moisture absorption zone and a second regeneration zone arranged along a circumferential direction of the secondary dehumidification rotor; and
along a flow direction of airflow in the dehumidification passage, the second moisture absorption zone is located downstream of the first moisture absorption zone.

With this arrangement, two dehumidification rotors are provided to perform multiple dehumidification treatments on the airflow, enhancing the dehumidification effect of the airflow.

According to some embodiments of this application, the second regeneration zone includes multiple second regeneration treatment zones arranged along the circumferential direction of the secondary dehumidification rotor, and the regeneration passage is provided with multiple secondary regeneration pipelines, where each secondary regeneration pipeline runs through one second regeneration treatment zone.

This arrangement allows each secondary regeneration pipeline in the regeneration passage to run through one second regeneration treatment zone. During regeneration treatment of the first regeneration zone, as the secondary dehumidification rotor rotates, each second regeneration treatment zone sequentially passes through each secondary regeneration pipeline, allowing multiple dehumidification treatments to enhance the regeneration effect.

According to some embodiments of this application, regeneration air temperatures of the multiple secondary regeneration pipelines are set in a decreasing manner along a rotation direction of the secondary dehumidification rotor.

With this arrangement, during regeneration treatment of the first regeneration zone, as the secondary dehumidification rotor rotates, a regeneration treatment zone in the second regeneration zone first rotates to correspond to a secondary regeneration pipeline with a relatively high airflow temperature, so as to be dehumidified with the high-temperature airflow to remove most of the moisture and cause moisture near an air inlet end of the second regeneration zone to be transferred to a surface layer region near an air outlet end. Subsequently, the second regeneration treatment zone rotates to correspond to a secondary regeneration pipeline with a relatively low airflow temperature, so as to be further dehumidified. Since the moisture has already moved to the surface layer under the action of the upstream high-temperature airflow, drying at a relatively low temperature can still effectively remove moisture to implement regeneration. This arrangement requires only localized heating of the second regeneration zone to a high-temperature state, reducing energy consumption for regeneration of the second regeneration zone. Additionally, since the airflow temperature downstream in the rotation direction is relatively low, the temperature of the regenerated rotor is also relatively low. After regeneration, when the rotor rotates to the second moisture absorption zone, the temperature difference with the airflow in the dehumidification passage is reduced, minimizing thermal offset between the second moisture absorption zone and the airflow and reducing energy waste.

According to some embodiments of this application, along the rotation direction of the primary dehumidification rotor, the first regeneration treatment zone adjacent to the first moisture absorption zone is a first sub-zone; and
along the rotation direction of the secondary dehumidification rotor, the second regeneration treatment zone adjacent to the second moisture absorption zone is a second sub-zone, where an area of the first sub-zone does not exceed an area of the second sub-zone.

Since the dehydration difficulty of the secondary dehumidification rotor is higher than the dehydration difficulty of the primary dehumidification rotor, this arrangement increases the area of the high-temperature dehumidification region of the secondary dehumidification rotor to achieve a good dehydration regeneration effect for the secondary dehumidification rotor. As for the primary dehumidification rotor with a relatively low dehydration difficulty, the area of the high-temperature regeneration region can be appropriately reduced, lowering energy consumption for regeneration of the first regeneration zone.

According to some embodiments of this application, mesopores in the secondary dehumidification rotor are smaller than at least some mesopores in the primary dehumidification rotor.

With this arrangement, during the process of dehumidifying airflow sequentially passing through the primary dehumidification rotor and the secondary dehumidification rotor, the primary dehumidification rotor is utilized to absorb most of the moisture in the airflow, and the secondary dehumidification rotor with smaller pores is utilized to further dehumidify the airflow, preventing smaller water molecules in the airflow from passing through the secondary dehumidification rotor, ensuring a good dehumidification effect.

According to some embodiments of this application, a diameter of the secondary dehumidification rotor is larger than a diameter of the primary dehumidification rotor.

This arrangement allows the secondary dehumidification rotor to have a relatively large specific surface area, which can enhance the moisture absorption amount and capability of the secondary dehumidification rotor to ensure a good dehumidification effect after the airflow is dehumidified by sequentially passing through the primary dehumidification rotor and the secondary dehumidification rotor.

According to some embodiments of this application, a thickness of the secondary dehumidification rotor is smaller than a thickness of the primary dehumidification rotor.

This arrangement reduces the thickness of the secondary dehumidification rotor, to allow moisture adsorbed by the secondary dehumidification rotor to be easily removed with regeneration air, facilitating dehydration regeneration of the second regeneration zone.

According to some embodiments of this application, along a flow direction of airflow in the regeneration passage, the second regeneration zone is located upstream of the first regeneration zone.

This arrangement allows regeneration air that is used for regeneration of the second regeneration zone to flow toward the first regeneration zone for regeneration of the first regeneration zone, improving the utilization of the airflow. Additionally, the temperature of the regeneration air after regeneration of the second regeneration zone is relatively high, which can reduce the energy consumed to elevate the temperature of the regeneration air during regeneration of the first regeneration zone.

According to some embodiments of this application, the dehumidification passage has a second connection position located downstream of the second moisture absorption zone; and
the rotary dehumidification device includes a second process air passage connecting the second connection position and the regeneration passage, where a connection position of the second process air passage and the regeneration passage is located upstream of the second regeneration zone.

This arrangement allows process air, which has undergone multi-stage dehumidification in the dehumidification passage, to be guided to the second regeneration zone through the second process air passage for regeneration treatment of the second regeneration zone, improving the utilization of the process air in the dehumidification passage.

According to some embodiments of this application, the dehumidification passage has a third connection position located between the first moisture absorption zone and the second moisture absorption zone; and
the rotary dehumidification device further includes a third process air passage connecting the third connection position and the regeneration passage, where a connection position of the third process air passage and the regeneration passage is located upstream of the second regeneration zone.

This arrangement allows process air, which has dehumidified by the primary dehumidification rotor, to be guided to the second regeneration zone through the third process air passage, improving the utilization of the process air in the dehumidification passage.

According to some embodiments of this application, along the rotation direction of the secondary dehumidification rotor, the secondary dehumidification rotor further includes a second cooling zone located between the second regeneration zone and the second moisture absorption zone, and the third process air passage runs through the second cooling zone.

This arrangement allows the airflow in the third process air passage to absorb heat from the second cooling zone. This can increase the temperature of the airflow in the third process air passage, thereby reducing the energy consumed to elevate the temperature of the regeneration air. This can also accelerate the cooling efficiency of the second cooling zone, and reduce the temperature difference between the airflow flowing to the second moisture absorption zone and the second moisture absorption zone, thereby minimizing thermal offset and reducing energy waste.

According to some embodiments of this application, the regeneration passage further includes a mixed air pipeline, where the multiple primary regeneration pipelines are in communication with an outlet end of the mixed air pipeline, and a first air intake position is disposed in the mixed air pipeline.

With this approach, the airflow directed to the first regeneration zone in the regeneration passage is first uniformly mixed in the mixed air pipeline before being distributed to each primary regeneration pipeline, ensuring uniform airflow distribution in each primary regeneration pipeline and ensuring good regeneration effects for each first regeneration treatment zone.

According to some embodiments of this application, the rotary dehumidification device includes a first heating structure disposed in the mixed air pipeline.

This arrangement utilizes the first heating structure to heat the regeneration air in the mixed air pipeline before the regeneration air is distributed to each primary regeneration pipeline, increasing the temperature of the regeneration air, improving the regeneration effect on the first regeneration zone, and reducing the number of heating structures disposed in the primary regeneration pipelines.

According to some embodiments of this application, the multiple primary regeneration pipelines include a first regeneration pipeline and a second regeneration pipeline sequentially arranged along the rotation direction of the primary dehumidification rotor;
where the rotary dehumidification device further includes a second heating structure disposed in the first regeneration pipeline, and the second regeneration pipeline is not provided with a heating structure, or the second regeneration pipeline is provided with a third heating structure, where a heating power of the third heating structure is less than a heating power of the second heating structure.

With this arrangement, the second heating structure is disposed in the first regeneration pipeline to increase the gas temperature in the first regeneration pipeline. This allows the second heating structure to independently control the airflow temperature in the first regeneration pipeline, making the airflow temperature control in the first regeneration pipeline more flexible. A third heating structure with relatively low heating efficiency can be disposed in the second regeneration pipeline to control the airflow temperature in the second regeneration pipeline, and the gas temperature in the second regeneration pipeline is elevated via the first regeneration pipeline, allowing the heating powers of the first heating component and the second heating component to be flexibly controlled and regulated according to actual demand, enhancing temperature regulation flexibility.

According to some embodiments of this application, the rotary dehumidification device further includes an indoor air passage, where the indoor air passage is in communication with the regeneration passage; and
a connection position of the indoor air passage and the regeneration passage is located upstream of the first regeneration zone.

This arrangement utilizes relatively dry indoor air as regeneration air to perform drying and regeneration treatment on the regeneration zone of the dehumidification rotor, and this portion of indoor air can be discharged outdoors through a moisture exhaust outlet of the regeneration passage. In other words, the rotary dehumidification device alone can introduce fresh air and expel indoor air to balance indoor air pressure and humidity, maintaining stable indoor air pressure and humidity without the need for additional indoor air exhaust systems. The application is convenient. Additionally, the indoor return air with low humidity can be reused. The indoor air has a certain temperature, reducing the energy consumed to elevate the temperature of the regeneration air.

According to some embodiments of this application, the indoor air passage includes two return air passages, where one return air passage is in communication with the regeneration passage, and the other return air passage is in communication with the dehumidification passage.

This arrangement allows the indoor air passage to introduce low-humidity indoor air into the regeneration passage as regeneration air or introduce indoor air into the dehumidification passage to mix with the airflow in the dehumidification passage, increasing the airflow volume in the dehumidification passage, and utilizing indoor air to reduce the humidity of the airflow in the dehumidification passage.

According to some embodiments of this application, the rotary dehumidification device further includes a fresh air passage, where the fresh air passage is in communication with the regeneration passage, and along a flow direction of airflow in the regeneration passage, a connection position of the fresh air passage and the regeneration passage is located upstream of the first regeneration zone.

This arrangement allows outdoor fresh air to be utilized for drying and regeneration on the first regeneration zone of the primary dehumidification rotor, increasing the volume of regeneration air and improving the regeneration effect.

According to some embodiments of this application, the dehumidification module further includes a condensation module disposed in the dehumidification passage.

This arrangement utilizes the condensation module to cool the airflow in the dehumidification passage and cause the airflow to release condensed water, enhancing the dehumidification capability of the rotary dehumidification device.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some embodiments of this application, and persons of ordinary skill in the art may derive other drawings from the structures shown in these accompanying drawings without creative efforts.
FIG. 1 is a schematic structural diagram of a dehumidification rotor according to some embodiments of this application;
FIG. 2 is a schematic structural diagram of a rotary dehumidification device according to some embodiments of this application;
FIG. 3 is a schematic structural diagram of another rotary dehumidification device according to some embodiments of this application;
FIG. 4 is a schematic structural diagram of still another rotary dehumidification device according to some embodiments of this application;
FIG. 5 is a schematic structural diagram of still another rotary dehumidification device according to some embodiments of this application;
FIG. 6 is a schematic cross-sectional view of a primary dehumidification rotor in a rotary dehumidification device according to some embodiments of this application;

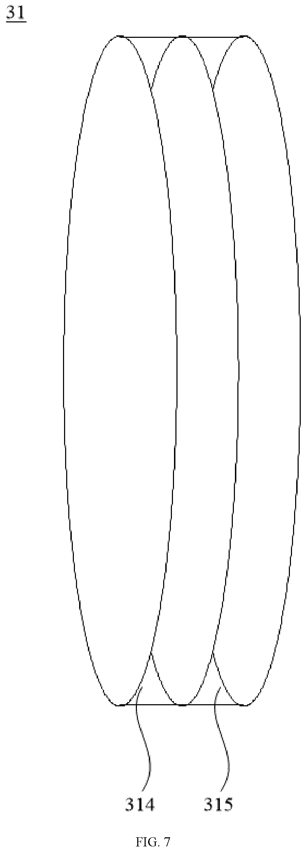

FIG. 7 is a schematic structural diagram of a primary dehumidification rotor in a rotary dehumidification device according to some embodiments of this application;
FIG. 8 is an exploded view of a primary dehumidification rotor in a rotary dehumidification device according to some embodiments of this application;
FIG. 9 is a schematic cross-sectional view of a secondary dehumidification rotor in a rotary dehumidification device according to some embodiments of this application;
FIG. 10 is a schematic cross-sectional view of another secondary dehumidification rotor in a rotary dehumidification device according to some embodiments of this application;
FIG. 11 is a structural diagram of fins of a first surface cooler in a rotary dehumidification device according to some embodiments of this application;
FIG. 12 is a structural diagram of fins of a second surface cooler in a rotary dehumidification device according to some embodiments of this application; and
FIG. 13 is a partial structural diagram of fins of a second surface cooler in a rotary dehumidification device according to some embodiments of this application.

### Description of reference signs:

100, rotary dehumidification device; 1, dehumidification passage; 11, fresh air inlet; 12, exhaust outlet; 13, first connection position; 14, second connection position; 15, third connection position; 16, fourth connection position;
2, regeneration passage; 21, primary regeneration pipeline; 211, first regeneration pipeline; 212, second regeneration pipeline; 22, mixed air pipeline; 23, first air intake position; 24, second air intake position; 25, third air intake position; 26, secondary regeneration pipeline; 261, third regeneration pipeline; 262, fourth regeneration pipeline; 27, moisture exhaust outlet;
201, first heating structure; 202, second heating structure; 203, third heating structure; 204, fourth heating structure;
3, dehumidification module; 31, primary dehumidification rotor; 311, first moisture absorption zone; 312, first regeneration zone; 3121, first regeneration treatment zone; 3121a, first sub-zone; 313, first cooling zone; 314, first adsorption layer; 315, second adsorption layer; 316, mesopore;
32, first condensation module; 321, first surface cooler; 3211, first fin; 322, second surface cooler; 3221, second fin; 3222, fin body; 3223, protruding structure;
33, secondary dehumidification rotor; 331, second moisture absorption zone; 332, second regeneration zone; 3321, second regeneration treatment zone; 3321a, second sub-zone; 333, second cooling zone;
34, second condensation module; 35, third condensation module;
4, indoor air passage; 41, first return air passage; 42, second return air passage; 43, third return air passage; 5, first process air passage; 51, first branch pipe; 52, second branch pipe; 53, third branch pipe; 54, flow distribution control structure; 541, airflow regulating valve;
6, second process air passage; 7, third process air passage; 8, fresh air passage; 9, fan; 10, filter;
300, dehumidification rotor; 301, moisture absorption zone; 302, regeneration zone; 3021, regeneration treatment zone; and 303, cooling zone.

The realization, functional features, and advantages of the objectives of this application are further described in conjunction with the embodiments and with reference to the accompanying drawings.

### DESCRIPTION OF EMBODIMENTS

The following describes the embodiments of the technical solutions of this application in detail with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meanings as commonly understood by persons skilled in the technical field of this application; the terms used herein are solely for the purpose of describing specific embodiments and are not intended to limit this application; the terms "include" and "have" and any variations thereof in the specification, claims, and the above description of the drawings of this application are intended to cover non-exclusive inclusion.

In the descriptions of the embodiments of this application, technical terms such as "first" and "second" are used only to distinguish different objects and should not be construed as indicating or implying relative importance or implicitly indicating the number, specific order, or primary-secondary relationship of the technical features indicated. In the descriptions of the embodiments of this application, "multiple" means two or more, unless otherwise specifically defined.

In this specification, reference to "embodiment" means that specific features, structures, or characteristics described with reference to the embodiment may be incorporated in at least one embodiment of this application. The appearance of this phrase in various positions in the specification does not necessarily refer to the same embodiment, nor does it refer to an independent or alternative embodiment mutually exclusive with other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates that the associated objects before and after the character are in an "or" relationship.

In the description of the embodiments of this application, the term "multiple" refers to two or more (including two); similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise explicitly specified and defined, technical terms such as "install", "connect", "couple", and "fix" should be understood in a broad sense. For example, they may refer to a fixed connection, a detachable connection, or an integral formation; they may refer to a mechanical connection or an electrical connection; they may refer to a direct connection or an indirect connection through an intermediate medium; they may refer to internal communication between two elements or an interaction relationship between two elements. Persons of ordinary skill in the art can understand the specific meanings of these terms in the embodiments of this application based on specific circumstances.

To meet the requirements of production processes, the relative humidity in the production workshops for multiple processes in a battery factory needs to be controlled to satisfy ambient humidity management requirements. In related technologies, a rotary dehumidification device can be utilized to introduce outdoor fresh air, dehumidify the fresh air, and discharge the dehumidified air indoors.

The rotary dehumidification device employs a dehumidification rotor as a core dehumidification structure. The dehumidification rotor is divided into a moisture absorption zone and a regeneration zone. Through rotation of the dehumidification rotor, each region of the dehumidification rotor cycles alternately between the moisture absorption zone and the regeneration zone. A portion of the rotor in the moisture absorption zone is configured to adsorb moisture from the fresh air to implement dehumidification, while a portion of the rotor rotated to the regeneration zone can be dried by hot air for dehydration regeneration. Currently, the energy consumption for regeneration of the dehumidification rotor is relatively high.

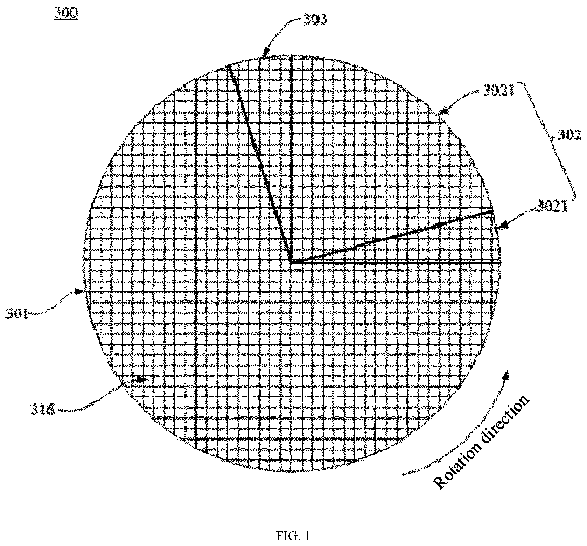

In view of the above issues, referring to FIG. 1, this application provides a dehumidification rotor 300. The dehumidification rotor 300 has a moisture absorption zone 301 and a regeneration zone 302 arranged along a circumferential direction of the dehumidification rotor 300, where a regeneration temperature of the regeneration zone 302 varies along the circumferential direction of the dehumidification rotor 300.

The dehumidification rotor 300 provided in this application has a moisture absorption zone 301 and a regeneration zone 302. Through rotation of the dehumidification rotor 300, each region of the dehumidification rotor 300 cycles alternately between the moisture absorption zone 301 and the regeneration zone 302. A portion of the rotor in the moisture absorption zone 301 dehumidifies airflow passing through the moisture absorption zone 301, while a portion of the rotor rotated to the regeneration zone 302 is dried by hot air for dehydration regeneration. In the embodiments of this application, the regeneration temperatures at different positions of the regeneration zone 302 are different, allowing for heating of only some regions of the regeneration zone 302 to a high-temperature state. This eliminates the need to heat the entire regeneration zone 302 to a high temperature, thereby reducing energy consumption during the regeneration process of the dehumidification rotor 300.

Optionally, during application of the dehumidification rotor 300, along a rotation direction of the dehumidification rotor 300, a regeneration temperature of the regeneration zone 302 may be set in a decreasing manner or in an increasing manner, or have high-temperature and low-temperature regions arranged alternately, which is not limited herein.

In some implementations, along the rotation direction of the dehumidification rotor 300, the dehumidification rotor 300 further includes a cooling zone 303 located between the regeneration zone 302 and the moisture absorption zone 301.

In this embodiment, the dehumidification rotor 300 further includes a cooling zone 303. It can be understood that after regeneration treatment using regeneration air, the temperature of the rotor in the regeneration zone 302 rises. In this case, the regenerated region is first rotated to the position of the cooling zone 303, allowing this portion of the rotor to undergo a pre-cooling treatment, preventing excessively high temperature of this portion of the rotor from affecting the moisture absorption effect after it rotates to the moisture absorption zone 301.

According to some embodiments of this application, the regeneration zone 302 includes multiple regeneration treatment zones 3021 arranged along the circumferential direction, where along a rotation direction of the dehumidification rotor 300, regeneration temperatures of the multiple regeneration treatment zones 3021 are set in a decreasing manner.

In this embodiment, each regeneration treatment zone 3021 first undergoes high-temperature treatment to remove most of the moisture from a surface layer and cause moisture in an inner layer of the dehumidification rotor 300 to move to the surface layer. When the regeneration treatment zone 3021 rotates to a lower-temperature region, since the inner-layer moisture has already moved to the surface layer, drying at a relatively low temperature can still effectively remove moisture to implement regeneration. Additionally, since the regeneration treatment zone 3021 downstream in the rotation direction has a relatively low temperature, the temperature of the region rotating to the moisture absorption zone 301 after regeneration is also relatively low, reducing a temperature difference between the moisture absorption zone 301 and the to-be-dehumidified airflow flowing toward the moisture absorption zone 301, thereby minimizing thermal offset between the moisture absorption zone 301 and the to-be-dehumidified airflow and reducing energy waste.

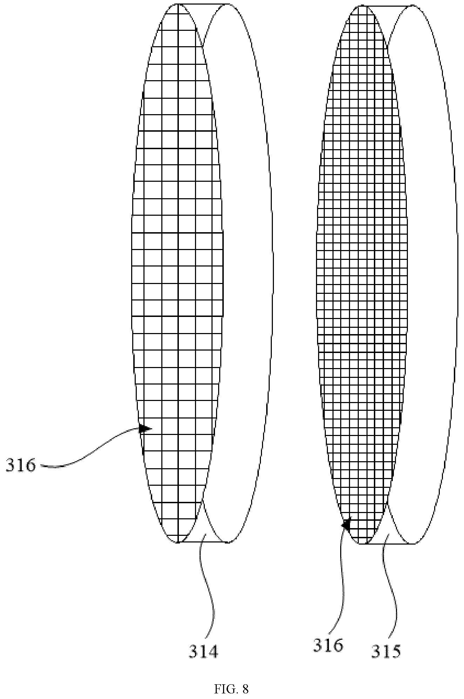

Referring to FIG. 8, according to some embodiments of this application, the dehumidification rotor 300 includes a first surface and a second surface arranged back to back along an axial direction of the dehumidification rotor, where along a direction from the first surface to the second surface, pore sizes of mesopores 316 of the dehumidification rotor 300 are set in a decreasing manner; and an air inlet end of the moisture absorption zone 301 is located at the first surface, and an air inlet end of the regeneration zone 302 is located at the second surface.

In this embodiment, the direction from the first surface to the second surface of the dehumidification rotor 300 is a moisture absorption direction of the dehumidification rotor 300. Airflow to be dehumidified enters the moisture absorption zone 301 from the first surface, moisture in the airflow is adsorbed by the dehumidification rotor 300, and the dehumidified airflow flows out from the second surface. A direction from the second surface to the first surface is a dehydration direction of the dehumidification rotor 300. Regeneration air flows into the regeneration zone 302 from the second surface, carrying away moisture adsorbed in the regeneration zone 302, and then flows out from the first surface.

With the above rotor structure, during dehumidification of the airflow, the airflow first passes through a layer with larger mesopores 316 near the first surface. Due to the larger mesopores 316, a specific surface area is increased, enabling more moisture in the airflow to be adsorbed in the layer near the first surface. As the airflow gradually flows to the second surface, the airflow passes through a layer with smaller mesopores 316, allowing smaller water molecules in the airflow to be adsorbed by the dehumidification rotor 300, enhancing the moisture absorption effect. During regeneration treatment of the regeneration zone 302, regeneration air first contacts the layer with smaller mesopores 316 for heat exchange, causing moisture in this layer to move to a surface layer region with larger mesopores 316. Since dehydration is less difficult in the surface layer region, even if the temperature of the regeneration air decreases after the regeneration air passes through the previous layer, the moisture in the surface layer region can still be sufficiently removed, implementing effective dehydration regeneration of the first regeneration zone 302.

Referring to FIG. 8, according to some embodiments of this application, the dehumidification rotor 300 includes a first adsorption layer 314 and a second adsorption layer 315 arranged in a stacked manner, where mesopores 316 of the first adsorption layer 314 are larger than mesopores 316 of the second adsorption layer 315, and a thickness of the first adsorption layer 314 is greater than a thickness of the second adsorption layer 315.

In this embodiment, the dehumidification rotor 300 can be formed by stacking adsorption layers with different sizes of mesopores 316, facilitating preparation. Additionally, the thickness of the adsorption layer with smaller mesopores 316, which has greater dehydration difficulty, is set to be relatively small, reducing the regeneration difficulty of the dehumidification rotor 300 and reducing energy consumption for regeneration of the dehumidification rotor 300. Certainly, the dehumidification rotor 300 may further include other adsorption layers, which is not limited herein.

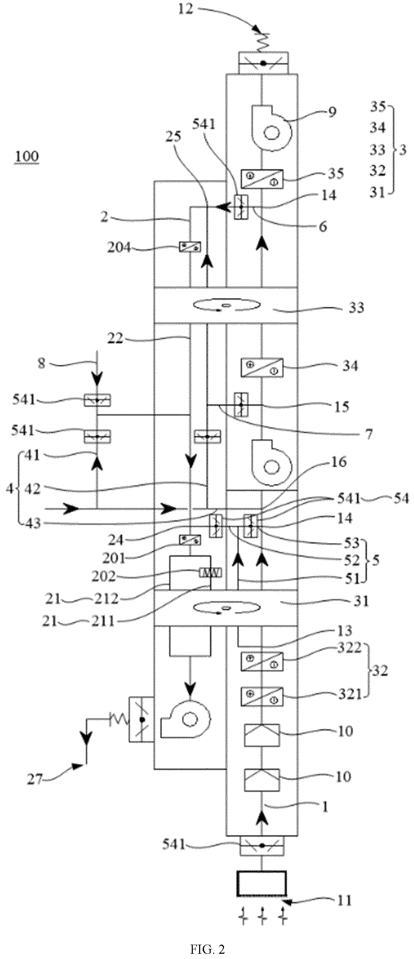

Referring to FIG. 2 to FIG. 5, this application further provides a rotary dehumidification device 100. The rotary dehumidification device 100 includes a dehumidification passage 1, a regeneration passage 2, and a dehumidification module 3. The regeneration passage 2 is branched to include multiple primary regeneration pipelines 21. The dehumidification module 3 includes a rotatably arranged primary dehumidification rotor 31, where the primary dehumidification rotor 31 includes a first moisture absorption zone 311 and a first regeneration zone 312 arranged along a circumferential direction of the primary dehumidification rotor 31, the first moisture absorption zone 311 is located in the dehumidification passage 1, and the first regeneration zone 312 is provided with multiple first regeneration treatment zones 3121 along the circumferential direction of the primary dehumidification rotor 31. The multiple primary regeneration pipelines 21 are in one-to-one correspondence with the multiple first regeneration treatment zones 3121, and regeneration air temperatures of at least two of the primary regeneration pipelines 3121 are different.

In the embodiments of this application, the rotary dehumidification device 100 is provided with at least one dehumidification rotor 300, where the dehumidification rotor 300 is a primary dehumidification rotor 31, and the primary dehumidification rotor 31 includes a first moisture absorption zone 311 and a first regeneration zone 312 distributed along the circumferential direction. It should be noted that the rotary dehumidification device 100 may be provided with multiple dehumidification rotors 300, and the primary dehumidification rotor 31 may be the 1st dehumidification rotor 300 along the dehumidification path, or the 2nd dehumidification rotor 300, the 3rd dehumidification rotor 300, or a dehumidification rotor 300 at another position.

The rotary dehumidification device 100 includes a dehumidification passage 1 for introducing outdoor fresh air. The dehumidification passage 1 is provided with a fresh air inlet 11 for outdoor fresh air to enter, and an exhaust outlet 12 for discharging dehumidified airflow. In specific applications, the exhaust outlet 12 is in communication with the indoor environment to discharge the dehumidified airflow indoors. The dehumidification passage 1 may be provided with one or more fans 9 to generate suction for drawing outdoor fresh air and provide power for the airflow to flow within the dehumidification passage 1. When the airflow flows along the dehumidification passage 1 and passes through the primary dehumidification rotor 31, moisture in the airflow is adsorbed in the first moisture absorption zone 311, achieving a dehumidification effect on the airflow. Optionally, the rotary dehumidification device 100 further includes a filter 10 disposed at the fresh air inlet 11, configured to filter the introduced fresh air to remove dust or other impurities from the fresh air, preventing dust and other impurities from being adsorbed onto the dehumidification rotor and other structures of the rotary dehumidification device 100.

The regeneration passage 2 in the rotary dehumidification device 100 is configured for regeneration air to flow through. The regeneration passage 2 runs through the first regeneration zone 312 of the primary dehumidification rotor 31, allowing the regeneration air to dry the adsorption medium in the first regeneration zone 312, implementing dehydration regeneration of the adsorption medium. The regeneration air carrying moisture after passing through the first regeneration zone 312 can be discharged through the moisture exhaust outlet 27 of the regeneration passage 2. The regeneration passage 2 may also be provided with a fan 9 to provide power for the airflow to flow within the regeneration passage 2. Optionally, the regeneration passage 2 may be provided with a heating structure to heat the regeneration air, increasing the temperature of the regeneration air and enhancing the regeneration treatment effect for the first regeneration zone 312.

The regeneration passage 2 includes multiple primary regeneration pipelines 21, where each primary regeneration pipeline 21 passes through one first regeneration treatment zone 3121. During regeneration treatment of the first regeneration zone 312, as the primary dehumidification rotor 31 rotates, each first regeneration treatment zone 3121 sequentially passes through each primary regeneration pipeline 21 to undergo dehydration regeneration treatments by regeneration air from different primary regeneration pipelines 21. This allows the first regeneration zone 312 to be dehumidified multiple times, enhancing the dehydration regeneration effect. The regeneration air temperatures in the primary regeneration pipelines are different, allowing for heating of regeneration air in only some of the primary regeneration pipelines to a high-temperature state. This eliminates the need for all regions of the regeneration zone to be dried and regenerated with high-temperature regeneration air, thereby reducing energy consumption during the regeneration process of the dehumidification rotor.

According to some embodiments of this application, along a rotation direction of the primary dehumidification rotor 31, regeneration air temperatures of the multiple primary regeneration pipelines 21 are set in a decreasing manner.

In this embodiment, the regeneration air temperatures in various primary regeneration pipelines 21 of the regeneration passage 2 differ. Along the rotation direction of the primary dehumidification rotor 31, the temperature of the regeneration air provided by an upstream primary regeneration pipeline 21 is higher than the temperature of the regeneration air provided by a downstream primary regeneration pipeline 21. With this arrangement, during regeneration treatment of the first regeneration zone 312, as the primary dehumidification rotor 31 rotates, the first regeneration treatment zone 3121 in the first regeneration zone 312 first rotates to correspond to a primary regeneration pipeline 21 with a relatively high airflow temperature, so as to be dehumidified with the high-temperature airflow to remove most of the moisture. Then, the first regeneration treatment zone 3121 rotates to correspond to a primary regeneration pipeline 21 with a relatively low airflow temperature, so as to be further dehumidified to remove residual moisture with the airflow. Such arrangement requires only localized heating of the first regeneration zone 312 to a high-temperature state, reducing energy consumption for regeneration of the first regeneration zone 312. Additionally, since the airflow temperature downstream in the rotation direction is relatively low, the temperature of the regenerated rotor is also relatively low. After regeneration, when the rotor rotates to the first moisture absorption zone 311, the temperature difference with the airflow in the dehumidification passage 1 is reduced, minimizing thermal offset between the first moisture absorption zone 311 and the airflow and reducing energy waste.

Optionally, the method of achieving different regeneration air temperatures in the primary regeneration pipelines 21 may include: providing a heating structure in each primary regeneration pipeline 21, where the heating structure in each primary regeneration pipeline 21 heats the airflow in the primary regeneration pipeline 21, raising the regeneration air to the required temperature. A heating efficiency of the heating structure disposed in an upstream primary regeneration pipeline 21 may be set higher than a heating efficiency of the heating structure disposed in a downstream primary regeneration pipeline 21. Additionally, in some implementations, the regeneration passage 2 may be configured as including a mixed air pipeline 22 and multiple primary regeneration pipelines 21, where regeneration air flows from the mixed air pipeline 22 to each primary regeneration pipeline 21; a first heating structure 201 is provided in the mixed air pipeline 22 to heat the regeneration air; and heating structures are respectively provided in the multiple primary regeneration pipelines 21 to heat the regeneration air to the required temperature through the heating structures in the primary regeneration pipelines 21. In some implementations, when a mixed air pipeline is provided and a first heating structure 201 is disposed in the mixed air pipeline, the downstream primary regeneration pipeline 21 may not need a heating structure, and the airflow can be heated to the required temperature through the first heating structure 201 in the mixed air pipeline 22.

Optionally, the first regeneration zone 312 includes two first regeneration treatment zones 3121, where a central angle of the upstream first regeneration treatment zone 3121 may be set to 60°-75°, and a central angle of the downstream first regeneration treatment zone 3121 may be set to 15°-30°.

Referring to FIG. 8, according to some embodiments of this application, the primary dehumidification rotor 31 has a first surface and a second surface arranged back to back along an axial direction of the primary dehumidification rotor; along a direction from the first surface to the second surface, mesopores 316 of the primary dehumidification rotor 31 are set in a decreasing manner; and an air inlet end of the first moisture absorption zone 311 is located at the first surface, and an air inlet end of the first regeneration zone 312 is located at the second surface.

The mesopores 316 in the dehumidification rotor refer to a pore structure present in a rotor adsorbent. The presence of the mesopores 316 can increase a large surface area for sufficient contact between humid air and a moisture-absorbing medium, improving dehumidification efficiency. Additionally, the mesopores 316 can increase the adsorption capacity of the adsorbent to provide additional adsorption space, allowing the adsorbent to adsorb more moisture and enhancing the moisture absorption capability of the dehumidification rotor.

In this embodiment, a direction from the first surface to the second surface of the primary dehumidification rotor 31 is a moisture absorption direction of the primary dehumidification rotor 31. Airflow to be dehumidified enters the first moisture absorption zone 311 from the first surface, moisture in the airflow is adsorbed by the primary dehumidification rotor 31, and the dehumidified airflow flows out from the second surface into downstream of the dehumidification passage 1. A direction from the second surface to the first surface is a dehydration direction of the primary dehumidification rotor 31. Regeneration air flows into the first regeneration zone 312 from the second surface, carrying away moisture adsorbed in the first regeneration zone 312, and then flows out from the first surface.

With the above rotor structure, during dehumidification of the airflow, the airflow first passes through a layer with larger mesopores 316 near the first surface. Due to the larger mesopores 316, a specific surface area is increased, enabling more moisture in the airflow to be adsorbed in the layer near the first surface. As the airflow gradually flows to the second surface, the airflow passes through a layer with smaller mesopores 316, allowing smaller water molecules in the airflow to be adsorbed by the primary dehumidification rotor 31, enhancing the moisture absorption effect. During regeneration treatment of the first regeneration zone 312, regeneration air first contacts the layer with smaller pore sizes for heat exchange, causing moisture in this layer to move to a surface layer region with larger pore sizes. Since dehydration is less difficult in the surface layer region, even if the temperature of the regeneration air decreases after the regeneration air passes through the previous layer, the moisture in the surface layer region can still be sufficiently removed, implementing effective dehydration regeneration of the first regeneration zone 312.

Referring to FIG. 8, according to some embodiments of this application, the primary dehumidification rotor 31 includes a first adsorption layer 314 and a second adsorption layer 315 arranged in a stacked manner, where mesopores 316 of the first adsorption layer 314 are larger than mesopores 316 of the second adsorption layer 315, and a thickness of the first adsorption layer 314 is greater than a thickness of the second adsorption layer 315.

In this embodiment, the primary dehumidification rotor 31 is formed by stacking multiple adsorption layers. Taking the primary dehumidification rotor 31 having a first adsorption layer 314 and a second adsorption layer 315 as an example, a pore size of mesopores 316 in the first adsorption layer 314 is larger than a pore size of mesopores 316 in the second adsorption layer 315. The primary dehumidification rotor 31 is formed through stacking, facilitating the preparation of the primary dehumidification rotor 31 and reducing preparation difficulty. Additionally, the thickness of the adsorption layer with smaller mesopores 316, which has greater dehydration difficulty, is set to be relatively small, reducing the regeneration difficulty of the primary dehumidification rotor 31 and reducing energy consumption for regeneration of the primary dehumidification rotor 31.

Referring to FIG. 2, according to some embodiments of this application, the dehumidification module 3 further includes a secondary dehumidification rotor 33, where the secondary dehumidification rotor 33 has a second moisture absorption zone 331 and a second regeneration zone 332 arranged along a circumferential direction of the secondary dehumidification rotor 33; and along a flow direction of airflow in the dehumidification passage 1, the second moisture absorption zone 331 is located downstream of the first moisture absorption zone 311.

In this embodiment, when fresh air is introduced into the dehumidification passage 1 for dehumidification treatment, the airflow in the dehumidification passage 1 passes through the first moisture absorption zone 311 of the primary dehumidification rotor 31, where a dehumidification medium in the first moisture absorption zone 311 absorbs part of the moisture from the airflow. Subsequently, the airflow flows to the second moisture absorption zone 331 of the secondary dehumidification rotor 33, where a dehumidification medium in the second moisture absorption zone 331 absorbs at least part of the residual moisture from the airflow to further dehumidify the airflow. Through arrangement of two dehumidification rotors, multiple dehumidification treatments are performed on the airflow, enhancing the dehumidification effect of the airflow. Optionally, along the flow direction of airflow in the dehumidification passage 1, other dehumidification rotors may be provided downstream of the secondary dehumidification rotor 33; additionally, other dehumidification rotors may be provided between the primary dehumidification rotor 31 and the secondary dehumidification rotor 33.

Optionally, in this embodiment, the first regeneration zone 312 and the second regeneration zone 332 may be disposed in the same regeneration passage 2. For example, the first regeneration zone 312 may be located downstream of the second regeneration zone 332, allowing the regeneration air passing through the second regeneration zone 332 to blow toward the first regeneration zone 312 for regeneration treatment of the first regeneration zone 312, improving the utilization of the regeneration air. In this embodiment, a first air intake position 23 in the regeneration passage 2 for connecting to an indoor air passage 4 may be disposed upstream of the second regeneration zone 332, or the first air intake position 23 may be disposed between the first regeneration zone 312 and the second regeneration zone 332. In this case, the regeneration passage 2 further has a third air intake position 25 disposed upstream of the second regeneration zone 332, where the third air intake position 25 may be configured to introduce at least one of indoor air, outdoor fresh air, and process air from the dehumidification passage 1.

When the first regeneration zone 312 and the second regeneration zone 332 are disposed in a same regeneration passage 2, the second regeneration zone 332 may also be located downstream of the first regeneration zone 312, allowing regeneration air passing through the first regeneration zone 312 to blow toward the second regeneration zone 332 for regeneration treatment of the second regeneration zone 332, similarly improving the utilization of the regeneration air.

In some implementations, two regeneration passages 2 may alternatively be provided, where one regeneration passage 2 runs through the first regeneration zone 312, and the other regeneration passage 2 runs through the second regeneration zone 332 for regeneration treatment of the second regeneration zone 332. A source of regeneration air passing through the second regeneration zone 332 may be at least one of indoor air, outdoor fresh air, and process air from the dehumidification passage 1.

Referring to FIG. 2, FIG. 4, and FIG. 9 together, the second regeneration zone 332 of the secondary dehumidification rotor 33 may not require segmentation, meaning that the regeneration temperature is the same throughout the second regeneration zone 332. The rotary dehumidification device 100 may include only one passage passing through the second regeneration zone 332.

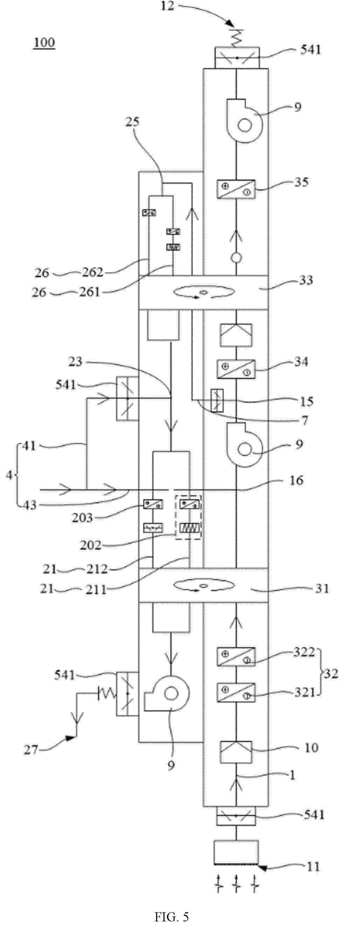

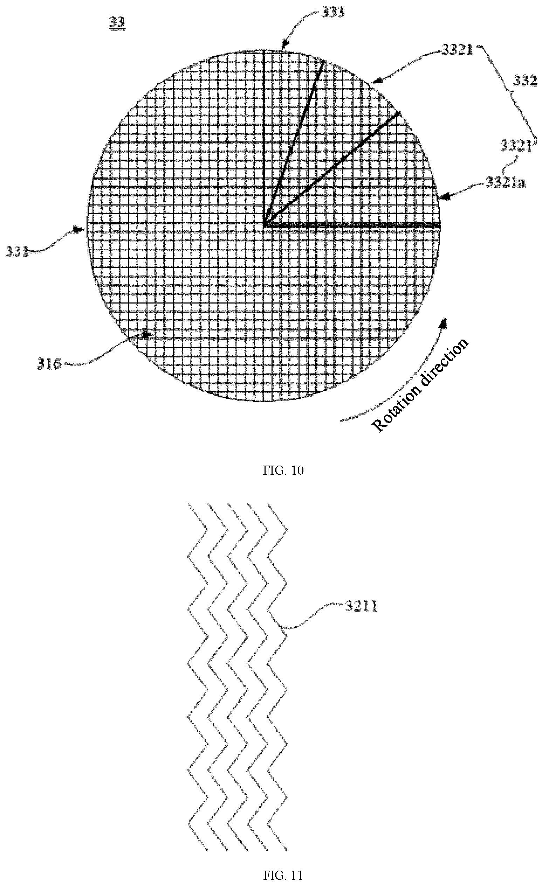

Referring to FIG. 5 and FIG. 10 together, according to some embodiments of this application, the second regeneration zone 332 includes multiple second regeneration treatment zones 3321 arranged along a circumferential direction of the secondary dehumidification rotor 33, and the regeneration passage 2 is provided with multiple secondary regeneration pipelines 26, where each secondary regeneration pipeline 26 runs through one second regeneration treatment zone 3321.

In this embodiment, the second regeneration zone 332 of the secondary dehumidification rotor 33 is provided with multiple second regeneration treatment zones 3321 along the circumferential direction of the secondary dehumidification rotor 33; correspondingly, the regeneration passage 2 is provided with multiple secondary regeneration pipelines 26 corresponding to the multiple second regeneration treatment zones 3321 of the secondary dehumidification rotor 33. During regeneration treatment of the second regeneration zone 332, as the secondary dehumidification rotor 33 rotates, each second regeneration treatment zone 3321 sequentially passes through each secondary regeneration pipeline 26 to undergo dehydration regeneration treatment by regeneration air from different secondary regeneration pipelines 26, allowing the second regeneration zone 332 to be dehumidified multiple times, and enhancing the dehydration regeneration effect.

According to some embodiments of this application, regeneration air temperatures of the multiple secondary regeneration pipelines 26 are set in a decreasing manner along a rotation direction of the secondary dehumidification rotor 33.

In this embodiment, the regeneration air temperatures in various secondary regeneration pipelines 26 of the regeneration passage 2 differ. Along the rotation direction of the secondary dehumidification rotor 33, the temperature of the regeneration air provided by an upstream secondary regeneration pipeline 26 is higher than the temperature of the regeneration air provided by a downstream secondary regeneration pipeline 26. With this arrangement, during regeneration treatment of the second regeneration zone 332, as the secondary dehumidification rotor 33 rotates, the second regeneration treatment zone 3321 in the second regeneration zone 332 first rotates to correspond to a secondary regeneration pipeline 26 with a relatively high airflow temperature, so as to be dehumidified with the high-temperature airflow to remove most of the moisture. Then, the second regeneration treatment zone 3321 rotates to correspond to a secondary regeneration pipeline 26 with a relatively low airflow temperature, so as to be further dehumidified to remove residual moisture with the airflow. Such arrangement requires only localized heating of the second regeneration zone 332 to a high-temperature state, reducing energy consumption for regeneration of the second regeneration zone 332. Additionally, since the airflow temperature downstream in the rotation direction is relatively low, the temperature of the regenerated rotor is also relatively low. After regeneration, when the rotor rotates to the second moisture absorption zone 331, the temperature difference with the airflow in the dehumidification passage 1 is reduced, minimizing thermal offset between the second moisture absorption zone 331 and the airflow and reducing energy waste.

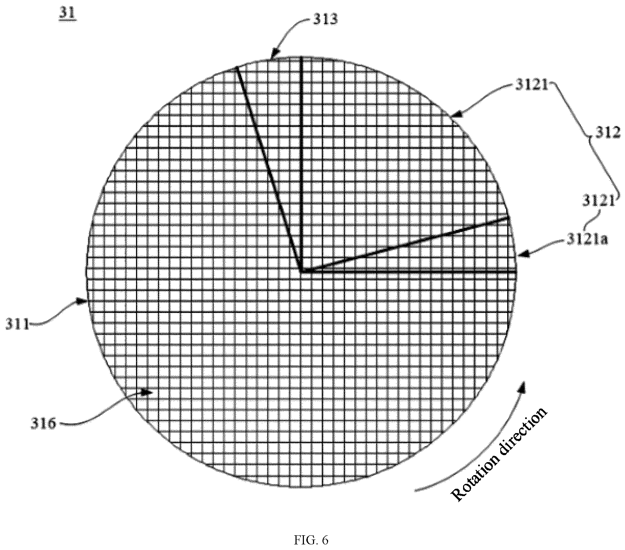

Referring to FIG. 6 and FIG. 10 together, according to some embodiments of this application, along the rotation direction of the primary dehumidification rotor 31, the first regeneration treatment zone 3121 adjacent to the first moisture absorption zone 311 is a first sub-zone 3121a; and along the rotation direction of the secondary dehumidification rotor 33, the second regeneration treatment zone 3321 adjacent to the second moisture absorption zone 331 is a second sub-zone 3321a, where an area of the first sub-zone 3121a does not exceed an area of the second sub-zone 3321a.

In this embodiment, with the first regeneration treatment zone 3121 adjacent to the first moisture absorption zone 311 as a first sub-zone 3121a, in the primary dehumidification rotor 31, a regeneration temperature of the first sub-zone 3121a is higher than a regeneration temperature of any other first regeneration treatment zone 3121 downstream of the first sub-zone 3121a. With the second regeneration treatment zone 3321 adjacent to the second moisture absorption zone 331 as a second sub-zone 3321a, in the secondary dehumidification rotor 33, a regeneration temperature of the second sub-zone 3321a is higher than a regeneration temperature of any other second regeneration treatment zone 3321 downstream of the second sub-zone 3321a.

In this embodiment, an area of the first sub-zone 3121a is set smaller than an area of the second sub-zone 3321a; and when diameters of the primary dehumidification rotor 31 and the secondary dehumidification rotor 33 are the same, a central angle of the first sub-zone 3121a is smaller than a central angle of the second sub-zone 3321a. Additionally, the diameter of the secondary dehumidification rotor 33 may be set larger than the diameter of the primary dehumidification rotor 31; and when the central angle of the first sub-zone 3121a is the same as the central angle of the second sub-zone 3321a, the second sub-zone 3321a can still be set larger than the first sub-zone 3121a, that is, a high-temperature regeneration region of the secondary dehumidification rotor 33 with a relatively high temperature is larger than a high-temperature regeneration region of the primary dehumidification rotor 31. When the moisture absorption amount of the secondary dehumidification rotor 33 is high or the pore size of the secondary dehumidification rotor 33 is relatively small, the dehydration difficulty of the secondary dehumidification rotor 33 is higher than the dehydration difficulty of the primary dehumidification rotor 31. This arrangement increases the area of the high-temperature dehumidification region of the secondary dehumidification rotor 33 to achieve a good dehydration regeneration effect the secondary dehumidification rotor 33. As for the primary dehumidification rotor 31 with a relatively low dehydration difficulty, the area of the high-temperature regeneration region can be appropriately reduced, lowering energy consumption for regeneration of the first regeneration zone 312.

According to some embodiments of this application, mesopores 316 in the secondary dehumidification rotor 33 are smaller than at least some mesopores 316 in the primary dehumidification rotor 31.

In this embodiment, at least some mesopores 316 in the primary dehumidification rotor 31 are set larger than the mesopores 316 in the secondary dehumidification rotor 33. With such arrangement, during the process that airflow is dehumidified by sequentially passing through the primary dehumidification rotor 31 and the secondary dehumidification rotor 33, the primary dehumidification rotor 31 absorbs most of the moisture in the airflow, and the secondary dehumidification rotor 33 with small pores further dehumidifies the airflow, preventing smaller water molecules in the airflow from passing through the secondary dehumidification rotor 33, thereby ensuring a good dehumidification effect.

According to some embodiments of this application, a diameter of the secondary dehumidification rotor 33 is larger than a diameter of the primary dehumidification rotor 31.

This arrangement allows the secondary dehumidification rotor 33 to have a relatively large specific surface area, which can enhance the moisture absorption amount and capability of the secondary dehumidification rotor 33 to ensure a good dehumidification effect after the airflow is dehumidified by sequentially passing through the primary dehumidification rotor and the secondary dehumidification rotor.

According to some embodiments of this application, a thickness of the secondary dehumidification rotor 33 is smaller than a thickness of the primary dehumidification rotor 31.

This arrangement reduces the thickness of the secondary dehumidification rotor 33, to allow moisture adsorbed by the secondary dehumidification rotor 33 to be easily removed with regeneration air, facilitating dehydration regeneration of the second regeneration zone 332.

Referring to FIG. 2, FIG. 4, and FIG. 5, according to some embodiments of this application, along a flow direction of airflow in the regeneration passage 2, the second regeneration zone 332 is located upstream of the first regeneration zone 312.

In this embodiment, the first regeneration zone 312 and the second regeneration zone 332 are located in the same regeneration passage 2, and the second regeneration zone 332 is located upstream of the first regeneration zone 312, allowing regeneration air passing through the second regeneration zone 332 to blow toward the first regeneration zone 312 for regeneration treatment of the first regeneration zone 312, improving the utilization of the regeneration air. Additionally, the temperature of the regeneration air after regeneration treatment of the second regeneration zone 332 is relatively high, reducing the energy consumed to elevate the temperature of the regeneration air during regeneration of the first regeneration zone 312.

Moreover, since the airflow has already been dehumidified by the primary dehumidification rotor 31, relatively less moisture is absorbed by the secondary dehumidification rotor 33, and the regeneration air that first passes through the second regeneration zone 332 is not excessively humid. Compared to the approach where the regeneration air first passes through the first regeneration zone 312 and then flows to the second regeneration zone 332, this approach prevents poor regeneration treatment effects of the regeneration air on the second regeneration zone 332.

Referring to FIG. 2, according to some embodiments of this application, the rotary dehumidification device 100 further includes a first process air passage 5, where two ends of the first process air passage 5 are respectively in communication with the dehumidification passage 1 and the regeneration passage 2; and a connection position of the first process air passage 5 and the regeneration passage 2 is located upstream of the first regeneration zone 312 to guide part of process air from the dehumidification passage 1 into the regeneration passage 2.

In this embodiment, part of the process air from the dehumidification passage 1 is introduced into the regeneration passage 2 as regeneration air, increasing the volume of the regeneration air and improving the utilization of the process air.

The connection position of the first process air passage 5 and the dehumidification passage 1 may be located upstream of the first moisture absorption zone 311. For example, a condensation module, a dehumidification rotor, or another dehumidification structure may be disposed upstream of the first moisture absorption zone 312, and the first process air passage 5 is connected between the dehumidification structure and the first moisture absorption zone 312, such as the first connection position 13 between the first condensation module 32 and the first moisture absorption zone 312 in the embodiments below. Certainly, when no other dehumidification structure is disposed upstream of the first moisture absorption zone 311, the first process air passage 5 may alternatively be connected upstream of the first moisture absorption zone 311. In this case, the airflow guided to the regeneration passage 2 through the first process air passage 5 is fresh air. Additionally, the connection position of the first process air passage 5 and the dehumidification passage 1 may be located downstream of the first moisture absorption zone 311. The process air that has undergone dehumidification treatment by the primary dehumidification rotor 31 has a relatively low humidity, achieving good regeneration treatment effects.

Referring to FIG. 2, according to some embodiments of this application, the dehumidification passage 1 includes a first connection position 13 located upstream of the first moisture absorption zone 311; and the first process air passage 5 is connected to the first connection position 13.

In this embodiment, the first process air passage 5 is utilized to guide process air located upstream of the first moisture absorption zone 311 in the dehumidification passage 1 to the regeneration passage 2 for use, improving the utilization of this portion of the regeneration air. Optionally, the dehumidification module 3 further includes a first condensation module 32 located upstream of the primary dehumidification rotor 31. In this case, the first connection position 13 may be located between the first condensation module 32 and the first moisture absorption zone 311, guiding part of the airflow that has undergone preliminary condensation dehumidification in the dehumidification passage 1 to the regeneration passage 2 for regeneration treatment of the primary dehumidification rotor 31. The airflow that has undergone condensation dehumidification has reduced humidity, improving the utilization of the process air while achieving good regeneration treatment effects on the first regeneration zone 312.

Referring to FIG. 2 and FIG. 6 together, in some implementations, along a rotation direction of the primary dehumidification rotor 31, the primary dehumidification rotor 31 further includes a first cooling zone 313 located between the first regeneration zone 312 and the first moisture absorption zone 311, and the first process air passage 5 runs through the first cooling zone 313.

In this embodiment, the primary dehumidification rotor 31 further includes a first cooling zone 313. It can be understood that after the regeneration air is utilized to perform regeneration treatment on the first regeneration zone 312, the temperature of the rotor in the first regeneration zone 312 increases. In this case, the first regeneration zone 312 is first rotated to the position of the first cooling zone 313, allowing this portion of the rotor to undergo a pre-cooling treatment, preventing excessively high temperature of this portion of the rotor from affecting the moisture absorption effect after it rotates to the first moisture absorption zone 311.

In this embodiment, the first process air passage 5 runs through the first cooling zone 313, utilizing the airflow cooled by the first condensation module 32 to absorb heat from the first cooling zone 313. This can increase the temperature of the airflow in the first process air passage 5, thereby reducing the energy consumed to elevate the temperature of the regeneration air. This can also accelerate the cooling efficiency of the first cooling zone 313, and reduce the temperature difference between the airflow directly flowing to the first moisture absorption zone 311 and the first moisture absorption zone 311, thereby minimizing thermal offset and reducing energy waste.

Referring to FIG. 2, according to some embodiments of this application, the first process air passage 5 includes a first branch pipe 51, a second branch pipe 52, and a third branch pipe 53. The first branch pipe 51 is in communication with the first connection position 13 and runs through the first cooling zone 313; the second branch pipe 52 is in communication with an air outlet end of the first branch pipe 51 and a second air intake position 24; and the third branch pipe 53 is in communication with the air outlet end of the first branch pipe 51 and a second connection position 14 of the dehumidification passage 1, and the second connection position 14 is located downstream of the first moisture absorption zone 311. The rotary dehumidification device 100 further includes a flow distribution control structure 54 disposed in the first process air passage 5, where the flow distribution control structure 54 is configured to control flow pass states of the second branch pipe 52 and the third branch pipe 53.

In this embodiment, the flow pass state of the second branch pipe 52 refers to the open or closed state of the second branch pipe 52 and the opening degree of the second branch pipe 52, and the flow pass state of the third branch pipe 53 refers to the open or closed state of the third branch pipe 53 and the opening degree of the third branch pipe 53. For example, the second branch pipe 52 and the third branch pipe 53 can both be controlled to be closed, in which case the process air in the dehumidification passage 1 is not drawn out by the first process air passage 5. Alternatively, one of the second branch pipe 52 and the third branch pipe 53 can be controlled to be open, while the other can be controlled to be closed, directing the airflow from the first branch pipe 51 into the opened branch pipe. Additionally, the opening degrees of the second branch pipe 52 and the third branch pipe 53 can be controlled to distribute the volumes of air flowing into the second branch pipe 52 and the third branch pipe 53.

The flow distribution control structure 54 may include a control valve disposed in the second branch pipe 52 and a control valve disposed in the third branch pipe 53, controlling the flow pass states of the corresponding branch pipes through the control valves. The flow distribution control structure 54 may alternatively be configured as a three-way valve, where an air inlet of the three-way valve is in communication with the air outlet end of the first branch pipe 51, and two air outlets of the three-way valve are respectively in communication with the second branch pipe 52 and the third branch pipe 53. The flow pass states of the second branch pipe 52 and the third branch pipe 53 are controlled by controlling the open/closed state and opening degrees of the two air outlets of the three-way valve.

Part of the process air subjected to condensation treatment in the first condensation module 32 is drawn from the dehumidification passage 1 through the first branch pipe 51, and the flow distribution control structure 54 controls the direction of the process air. The airflow can be controlled to pass through the second branch pipe 52 to the regeneration passage 2 for rotor regeneration, or the airflow can be controlled to pass through the third branch pipe 53 to downstream of the first moisture absorption zone 311 for direct discharge indoors or further dehumidification by other dehumidification structures according to demand, adapting to different operating conditions and enhancing the flexibility and applicability of the rotary dehumidification device 100.

In specific applications, when the process air treated by the first condensation module 32 does not need to be utilized, the second branch pipe 52 and the third branch pipe 53 are both controlled to be closed. In this case, the process air in the dehumidification passage 1 is not drawn out by the first process air passage 5.

When only the process air is needed to cool the first cooling zone 313, the second branch pipe 52 is closed, and the third branch pipe 53 is opened, so that this portion of the process air flows through the first cooling zone 313 and then returns to the dehumidification passage 1 through the third branch pipe 53. When the process air is needed to cool the first cooling zone 313 and part of the process air is also needed for regeneration treatment of the first regeneration zone 312, the second branch pipe 52 is opened, and the process air flowing through the first cooling zone 313 flows to the first regeneration zone 312 via the second branch pipe 52, and in this case, the third branch pipe 53 may be closed or opened.

Additionally, in some implementations, the opening mode can be selected based on the humidity of the process air. For example, when another dehumidification structure, such as a condensation module or a dehumidification rotor, is disposed downstream of the first moisture absorption zone 311, in a case that the humidity of outdoor fresh air is high and the humidity of the process air after condensation treatment by the first condensation module 32 remains high, this process air is not suitable for regeneration treatment, and the second branch pipe 52 can be closed and the third branch pipe 53 can be opened, directing the process air in the first branch pipe 51 to the third branch pipe 53 to flow downstream of the first moisture absorption zone 311 for further dehumidification by subsequent dehumidification structures. In a case that the process air after condensation treatment by the first condensation module 32 is relatively dry, the second branch pipe 52 can be opened, directing the process air to the second branch pipe 52 for regeneration treatment of the first regeneration zone 312, and in this case, the third branch pipe 53 may be closed or opened.

Referring to FIG. 2 to FIG. 5, according to some embodiments of this application, the first condensation module 32 includes multiple surface coolers sequentially arranged along an airflow direction, where refrigeration temperatures of the multiple surface coolers are set in a decreasing manner.

In this embodiment, the first condensation module 32 includes surface coolers, where the surface cooler is provided with a coolant flow channel. A low-temperature coolant of a required temperature is introduced into the coolant flow channel, so that the region of the surface cooler in contact with the airflow stays at the required refrigeration temperature. When the airflow passes through the surface cooler, the airflow exchanges heat with the surface cooler with a relatively low temperature, cooling the airflow and causing moisture in the airflow to precipitate as condensed water, thereby achieving the purpose of cooling and dehumidifying the fresh air in the dehumidification passage 1. Optionally, the surface cooler may be provided with multiple parallel fins, and the airflow can flow between two adjacent fins to exchange heat with the fins. The fins may be flat fins, corrugated fins, fin structures with protruding structures 3223 as in the embodiments below, or other shapes, which are not limited herein.

Referring to FIG. 2 to FIG. 5, in some implementations, the dehumidification module 3 further includes a first condensation module 32 located upstream of the primary dehumidification rotor 31.

Specifically, the first condensation module 32 is disposed between the fresh air inlet 11 and the primary dehumidification rotor 31. This allows outdoor fresh air flowing toward the primary dehumidification rotor 31 to first pass through the first condensation module 32 for condensation dehumidification, causing the fresh air to release condensed water, and reducing the temperature and humidity of the fresh air. This reduces the dehumidification load on the primary dehumidification rotor 31 and decreases the moisture absorption amount of the primary dehumidification rotor 31, thereby lowering the energy consumption for regeneration of the primary dehumidification rotor 31. The first condensation module 32 includes a surface cooler, and the number of surface coolers in the first condensation module 32 can be set according to demand, such as one, two, or more than two.

In this embodiment, the first condensation module 32 is provided with two or more surface coolers. Utilizing multi-stage surface coolers for step-by-step condensation dehumidification allows the airflow to undergo multiple condensation dehumidification processes before reaching the primary dehumidification rotor 31, improving condensation dehumidification efficiency.

Additionally, the refrigeration temperature of the upstream surface cooler is set higher than the refrigeration temperature of the downstream surface cooler. Specifically, taking the first condensation module 32 having a first surface cooler 321 and a second surface cooler 322 located downstream of the first surface cooler 321 as an example, a refrigeration temperature of the first surface cooler 321 is a first temperature, and a refrigeration temperature of the second surface cooler 322 is a second temperature, where the first temperature is higher than the second temperature. The fresh air entering the dehumidification passage 1 first passes through the first surface cooler 321 to be cooled to the first temperature, and the airflow at the first temperature then passes through the second surface cooler 322 to be cooled to the second temperature. With this arrangement, when the first condensation module 32 is needed to cool the fresh air to the second temperature, there is no need to set the refrigeration temperature of the first surface cooler 321 to the lower second temperature, reducing refrigeration energy consumption. On the other hand, the refrigeration temperature of the first surface cooler 321 can be set higher, avoiding that a large temperature difference between the first surface cooler 321 and the fresh air causes significant thermal offset. Thus, energy waste is minimized by reducing thermal offset. Similarly, since the airflow is first cooled to the first temperature by the first surface cooler 321, the temperature difference between the airflow flowing to the second surface cooler 322 and the second surface cooler 322 can also be reduced, improving the refrigeration efficiency of the second surface cooler 322 on the airflow and reducing energy waste.

It can be understood that the first condensation module 32 may be provided with three or more surface coolers. With the arrangement of this embodiment, the refrigeration temperature of the upstream surface cooler does not need to be set too low, and each surface cooler has high refrigeration efficiency and low energy waste, effectively reducing refrigeration energy consumption.

Referring to FIG. 2 to FIG. 5, in some implementations, the multiple surface coolers include a first surface cooler 321 and a second surface cooler 322 located downstream of the first surface cooler 321, where a refrigeration temperature of the second surface cooler 322 is 3°C to 8°C.

In this embodiment, the refrigeration temperature of the second surface cooler 322 may be set to 3°C, 4°C, 5°C, 5.5°C, 6°C, 7°C, 8°C, or any value between 3°C and 8°C. This can be implemented by introducing a low-temperature coolant of a corresponding temperature into a coolant flow channel of the second surface cooler 322. A refrigeration temperature of the first surface cooler 321 only needs to be higher than the refrigeration temperature of the second surface cooler 322. For example, when the refrigeration temperature of the second surface cooler 322 is 6°C, the refrigeration temperature of the first surface cooler 321 may be, but is not limited to, 7°C, 8°C, 9°C, 10°C, 11°C, 12°C, 12.5°C, 13°C, 14°C, 15°C, 16°C, or any other value higher than 6°C, which is not limited herein.

This arrangement ensures that the airflow passing through the first condensation module 32 is cooled to a relatively low temperature, providing good cooling and dehumidification effects, and reducing the dehumidification load on the primary dehumidification rotor 31. When this process air is utilized to cool the first cooling zone 313 of the primary dehumidification rotor 31, a good cooling effect can also be achieved. When this process air is utilized as regeneration air for regeneration treatment of the first regeneration zone 312 of the primary dehumidification rotor 31, excessive humidity in the regeneration air can be avoided, ensuring the regeneration treatment effect.

In some implementations, the refrigeration temperature of the first surface cooler 321 is 10°C to 15°C.

In this embodiment, the refrigeration temperature of the first surface cooler 321 may be set to 10°C, 11°C, 12°C, 12.5°C, 13°C, 14°C, 15°C, or any value between 10°C and 15°C. This can be implemented by introducing a low-temperature coolant of a corresponding temperature into the coolant flow channel of the first surface cooler 321. This arrangement avoids a large gap between the refrigeration temperature of the first surface cooler 321 and the refrigeration temperature of the second surface cooler 322, preventing a significant temperature difference between the process air after passing through the first surface cooler 321 and the second surface cooler 322. This ensures that the process air can be cooled to a preset temperature by the second surface cooler 322, improving the refrigeration efficiency of the second surface cooler 322 on the airflow, and reducing energy waste.

In one implementation, a spacing between two adjacent fins in at least one surface cooler does not exceed 1.8 mm.

In this embodiment, among the multiple surface coolers disposed in the first condensation module 32, the spacing between two adjacent fins in at least one surface cooler is set to not exceed 1.8 mm. The fin spacing of this surface cooler may be 1.8 mm, 1.7 mm, 1.6 mm, 1.55 mm, 1.5 mm, 1.4 mm, or any value greater than 0 and not exceeding 1.8 mm. This arrangement allows a high density of fins in the surface cooler, increasing the total heat exchange area of the surface cooler to improve heat exchange efficiency and refrigeration efficiency, ensuring the cooling effect on the airflow.

In specific applications, the fin spacing of each surface cooler in the first condensation module 32 may be set to not exceed 1.8 mm, or the fin spacing of some surface coolers may be set to not exceed 1.8 mm, while the fin spacing of other surface coolers is set to exceed 1.8 mm.

Taking the first condensation module 32 having a first surface cooler 321 and a second surface cooler 322 located downstream of the first surface cooler 321 as an example, the fin spacing of the second surface cooler 322 may be set to not exceed 1.8 mm to ensure that the second surface cooler 322 has good heat exchange efficiency and refrigeration efficiency. The fin spacing of the first surface cooler 321 may be set larger than the fin spacing of the second surface cooler 322. The fin spacing of the first surface cooler 321 may be within a range of not exceeding 1.8 mm, or may be greater than 1.8 mm, such as 1.9 mm, 2 mm, 2.1 mm, 2.2 mm, 2.3 mm, 2.4 mm, 2.5 mm, or other values.

Additionally, the fin spacing of the first surface cooler 321 may alternatively be the same as or smaller than that of the second surface cooler 322. Alternatively, in some implementations, the fin spacing of the first surface cooler 321 may be set to not exceed 1.8 mm, while the fin spacing of the second surface cooler 322 may be set to exceed 1.8 mm, which is not specifically limited herein.

In some implementations, the multiple surface coolers include a first surface cooler 321 and a second surface cooler 322 located downstream of the first surface cooler 321, where the first surface cooler 321 has multiple first fins 3211 arranged in parallel, the second surface cooler 322 has multiple second fins 3221 arranged in parallel, and a spacing between two adjacent second fins 3221 is smaller than a spacing between two adjacent first fins 3211.

In this embodiment, the surface cooler disposed in the first condensation module 32 is provided with multiple fins arranged in parallel, and an airflow channel is formed between two adjacent fins. When flowing through the airflow channel, the airflow can exchange heat with the fins on two sides. Taking the first condensation module 32 including a first surface cooler 321 and a second surface cooler 322 as an example, the first surface cooler 321 includes multiple first fins 3211 arranged in parallel, and the second surface cooler 322 includes multiple second fins 3221 arranged in parallel. A fin spacing of the second surface cooler 322 is set small to increase the density of the second fins 3221, thereby increasing the total heat exchange area of the second surface cooler 322 to improve heat exchange efficiency and refrigeration efficiency. In this way, the airflow can be cooled to the required temperature after passing through the second surface cooler 322, guaranteeing the cooling effect on the airflow. The fin spacing between adjacent first fins 3211 is set greater than the fin spacing between adjacent second fins 3221, demonstrating that the structure of the first surface cooler 321 does not need to be overly complex. Instead, a surface cooler with a relatively low refrigeration efficiency can be used as the upstream surface cooler to simplify the structure of the upstream surface cooler, thereby reducing the cost of the rotary dehumidification device 100.

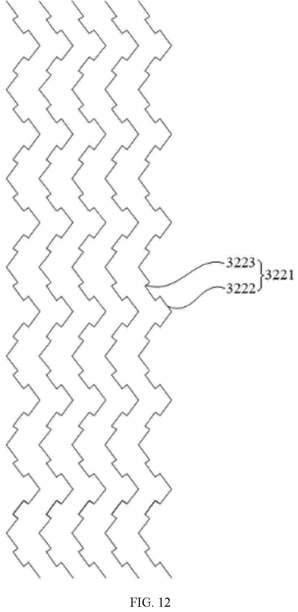

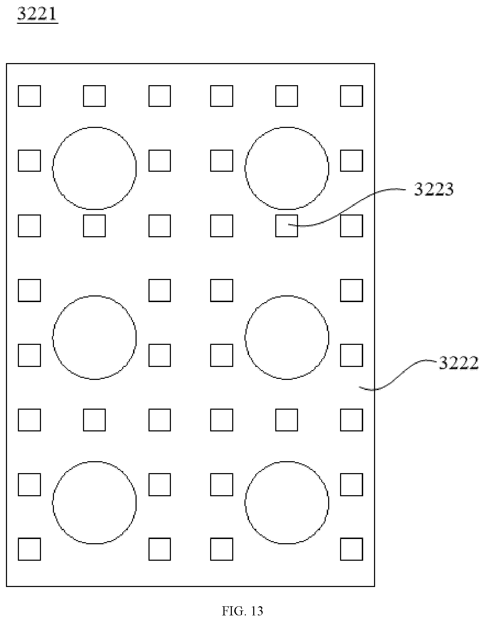

Referring to FIG. 12 and FIG. 13, in one implementation, fins of at least one surface cooler include a fin body 3222 and multiple protruding structures 3223 protruding relative to the fin body 3222.

In this embodiment, the fins disposed in the surface cooler include a fin body 3222 as the main structure, where the fin body 3222 can be regarded as a flat fin structure or a corrugated fin structure. Multiple protruding structures 3223 are disposed on the surface of the fin body 3222, which helps increase the surface area of the fins, increasing the contact area with the airflow and enhancing airflow disturbance to improve heat exchange efficiency and refrigeration efficiency. The shape of the protruding structures 3223 may be rectangular, cylindrical, hemispherical, or other regular or irregular shapes. One surface cooler may be provided with protruding structures 3223 of one shape, or may be provided with protruding structures 3223 of different shapes.

Optionally, in specific applications, the fins of each surface cooler in the first condensation module 32 may all be configured as the fins with the protruding structures 3223 described above, or the fins of some surface coolers may be provided with the protruding structures 3223 while the fins of other surface coolers are not provided with the protruding structures 3223.

Taking the first condensation module 32 having a first surface cooler 321 and a second surface cooler 322 located downstream of the first surface cooler 321 as an example, fins of the second surface cooler 322 can be configured as including a fin body 3222 and protruding structures 3223, while fins of the first surface cooler 321 are not provided with protruding structures 3223, ensuring that the second surface cooler 322 has good heat exchange efficiency and refrigeration efficiency. In this way, the airflow can be cooled to the required temperature after passing through the second surface cooler 322, guaranteeing the cooling effect on the airflow. Additionally, the structure of the first surface cooler 321 does not need to be overly complex, simplifying the structure of the upstream surface cooler and reducing the cost of the rotary dehumidification device 100.

Certainly, in some implementations, the first surface cooler 321 may alternatively be configured as including a fin body 3222 and protruding structures 3223. Alternatively, the first surface cooler 321 may be configured as including a fin body 3222 and protruding structures 3223, while the fins of the second surface cooler 322 are not provided with protruding structures 3223.

Referring to FIG. 11 and FIG. 12 together, in one implementation, the multiple surface coolers include a first surface cooler 321 and a second surface cooler 322 located downstream of the first surface cooler 321, where the first surface cooler 321 has multiple first fins 3211 arranged in parallel, the second surface cooler 322 has multiple second fins 3221 arranged in parallel, and a surface area of the first fins 3211 is smaller than a surface area of the second fins 3221.

In this embodiment, the surface area of the second fins 3221 in the second surface cooler 322 is set larger to ensure that the second surface cooler 322 has good heat exchange efficiency and refrigeration efficiency. In this way, the airflow can be cooled to the required temperature after passing through the second surface cooler 322, guaranteeing the cooling effect on the airflow. Additionally, the structure of the first surface cooler 321 does not need to be overly complex, simplifying the structure of the upstream surface cooler and reducing the cost of the rotary dehumidification device 100.

Optionally, the method of setting the surface area of the first fins 3211 smaller than the surface area of the second fins 3221 may be: setting a length of the first fins 3211 to be shorter than a length of the second fins 3221; or setting the first fins 3211 as flat fins and the second fins 3221 as corrugated fins; or when both the first fins 3211 and the second fins 3221 are configured as corrugated fins, providing protruding structures 3223 on a surface of the fin body 3222 of the second fins 3221.

Referring to FIG. 2, FIG. 4, and FIG. 5, according to some embodiments of this application, the dehumidification module 3 further includes a second condensation module 34 located between the first moisture absorption zone 311 and the second moisture absorption zone 331.

In this embodiment, the dehumidification module 3 further includes the second condensation module 34, where the second condensation module may include one, two, or more surface coolers. The airflow flowing from the first moisture absorption zone 311 first passes through the second condensation module 34 for cooling, causing the airflow to release condensed water, providing a cooling and dehumidification effect on the airflow. This can improve the dehumidification effect, reduce the dehumidification load on the secondary dehumidification rotor 33, as well as decrease the moisture absorption amount of the secondary dehumidification rotor 33 to lower the energy consumption for regeneration of the secondary dehumidification rotor 33.

Optionally, the refrigeration temperature of the second condensation module 34 may be set to 10°C to 15°C. In a case that the second condensation module 34 is provided with multiple surface coolers, refrigeration temperatures of the surface coolers may be the same or different. Optionally, the refrigeration temperatures of the multiple surface coolers may be set in a decreasing manner.

Referring to FIG. 2, FIG. 4, and FIG. 5, according to some embodiments of this application, the regeneration passage 2 includes a first air intake position 23 located between the first regeneration zone 312 and the second regeneration zone 332, and a third air intake position 25 located upstream of the second regeneration zone 332.

In this embodiment, the first air intake position 23 may be used to introduce at least one of indoor air, outdoor fresh air, process air from the dehumidification passage 1, or the like, and the third air intake position 25 may be used to introduce at least one of indoor air, outdoor fresh air, process air from the dehumidification passage 1, or the like.

Additionally, in some embodiments, the regeneration air passing through the second regeneration zone 332 is reused for regeneration treatment of the first regeneration zone 312. In this case, at least one of low-humidity indoor air and process air can be introduced from the first air intake position 23 to mix with the regeneration air flowing through the second regeneration zone 332 to reduce the humidity of the airflow flowing from the second regeneration zone 332 to the first regeneration zone 312, allowing the airflow directed to the first regeneration zone 312 to effectively remove moisture from the first regeneration zone 312, thereby achieving a good drying and regeneration effect.

Referring to FIG. 2, FIG. 4, and FIG. 5, according to some embodiments of this application, the regeneration passage 2 further includes a mixed air pipeline 22, where the multiple primary regeneration pipelines 211 are in communication with an outlet end of the mixed air pipeline 22.

In this embodiment, in addition to indoor return air, the regeneration air flowing to the first regeneration zone 312 in the regeneration passage 2 may further include at least one of process air from the dehumidification passage 1, outdoor fresh air, and regeneration air flowing through the second regeneration zone 332. The arrangement of the mixed air pipeline allows various airflows to be uniformly mixed before being distributed to each primary regeneration pipeline 21, ensuring uniform airflow distribution in each primary regeneration pipeline 21 and ensuring good regeneration effects for each first regeneration treatment zone 3121. Optionally, in some embodiments, an airflow regulating valve 541 may be disposed to control a volume of air flowing from the mixed air pipeline into each regeneration passage 2.

Referring to FIG. 2, FIG. 4, and FIG. 5, according to some embodiments of this application, the rotary dehumidification device includes a first heating structure 201 disposed in the mixed air pipeline 22.

This arrangement utilizes the first heating structure 201 to heat the regeneration air in the mixed air pipeline before the regeneration air is distributed to each primary regeneration pipeline 21, increasing the temperature of the regeneration air, improving the regeneration effect on the first regeneration zone 312, and reducing the number of heating structures disposed in the primary regeneration pipelines 21. The first heating structure 201 may include at least one of a hot water heating element and an electric heating element.

Referring to FIG. 2 to FIG. 5, according to some embodiments of this application, the multiple primary regeneration pipelines 21 include a first regeneration pipeline 211 and a second regeneration pipeline 212 sequentially arranged along the rotation direction of the primary dehumidification rotor 31; where the rotary dehumidification device 100 further includes a second heating structure 202 disposed in the first regeneration pipeline 211, and the second regeneration pipeline 212 is not provided with a heating structure, or the second regeneration pipeline 212 is provided with a third heating structure 203, where a heating power of the third heating structure 203 is less than a heating power of the second heating structure 202.

With this arrangement, the second heating structure 202 is disposed in the first regeneration pipeline 211 to increase the gas temperature in the first regeneration pipeline 211, so that the second heating structure 202 can be utilized to independently control the airflow temperature in the first regeneration pipeline 211, making the airflow temperature control in the first regeneration pipeline 211 more flexible. The third heating structure 203 with a relatively low heating efficiency can be disposed in the second regeneration pipeline 212 to control the airflow temperature in the second regeneration pipeline 212. Additionally, the gas temperature in the second regeneration pipeline 212 is elevated via the first regeneration pipeline 211, allowing the heating powers of the first heating component and the second heating component to be flexibly controlled and regulated according to actual demand, enhancing temperature regulation flexibility.

Referring to FIG. 2, according to some embodiments of this application, the dehumidification module 3 includes a secondary dehumidification rotor 33, and the dehumidification passage 1 includes a second connection position 14 located downstream of the second moisture absorption zone 331. The rotary dehumidification device 100 includes a second process air passage 6 connecting the second connection position 14 and the regeneration passage 2, where a connection position of the second process air passage 6 and the regeneration passage 2 is located upstream of the second regeneration zone 332 of the secondary dehumidification rotor 33.

In this embodiment, the regeneration air flowing to the second regeneration zone 332 for regeneration treatment of the second regeneration zone 332 originates from the process air in the dehumidification passage 1 that has been dehumidified by the primary dehumidification rotor 31 and the secondary dehumidification rotor 33. Specifically, the rotary dehumidification device 100 is provided with the second process air passage 6. The second process air passage 6 can draw the process air that has undergone multi-stage dehumidification in the dehumidification passage 1 from the second connection position 14 located downstream of the second moisture absorption zone 331 and guide this process air to the third air intake position 25 of the regeneration passage 2 to flow into the regeneration passage 2, allowing the airflow to flow to the second regeneration zone 332 via the regeneration passage 2 for regeneration treatment of the second regeneration zone 332, improving the utilization of the process air in the dehumidification passage 1. The process air that has undergone multi-stage dehumidification is also relatively dry, providing a good regeneration treatment effect on the second regeneration zone 332.

Referring to FIG. 2, according to some embodiments of this application, the dehumidification module 3 includes a secondary dehumidification rotor 33, the dehumidification passage 1 further includes a third connection position 15 located between the first moisture absorption zone 311 and the second moisture absorption zone 331, and the rotary dehumidification device 100 further includes a third process air passage 7 connecting the third connection position 15 and the regeneration passage 2, where a connection position of the third process air passage 7 and the regeneration passage 2 is located upstream of the second regeneration zone 332 of the secondary dehumidification rotor 33.

In this embodiment, the regeneration air flowing to the second regeneration zone 332 for regeneration treatment of the second regeneration zone 332 originates from the process air in the dehumidification passage 1 that has been dehumidified by the primary dehumidification rotor 31. The rotary dehumidification device 100 is provided with the third process air passage 7. The third process air passage 7 can draw the process air that has been dehumidified by the primary dehumidification rotor 31 in the dehumidification passage 1 from the third connection position 15 located between the first moisture absorption zone 311 and the second moisture absorption zone 331 and guide this process air to the third air intake position 25 of the regeneration passage 2 to flow into the regeneration passage 2, allowing the airflow to flow to the second regeneration zone 332 via the regeneration passage 2 for regeneration treatment of the second regeneration zone 332, improving the utilization of the process air in the dehumidification passage 1. The process air dehumidified by the primary dehumidification rotor 31 is also relatively dry, providing a good regeneration treatment effect on the second regeneration zone 332.

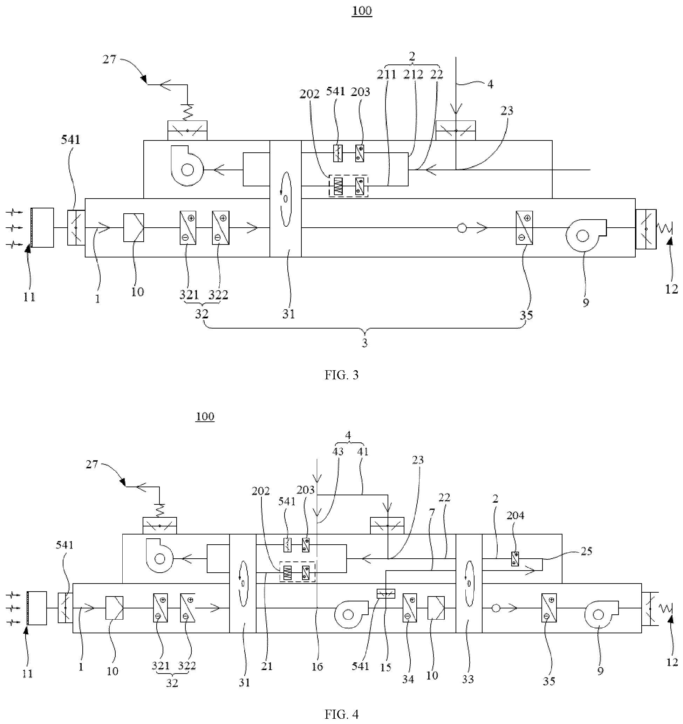

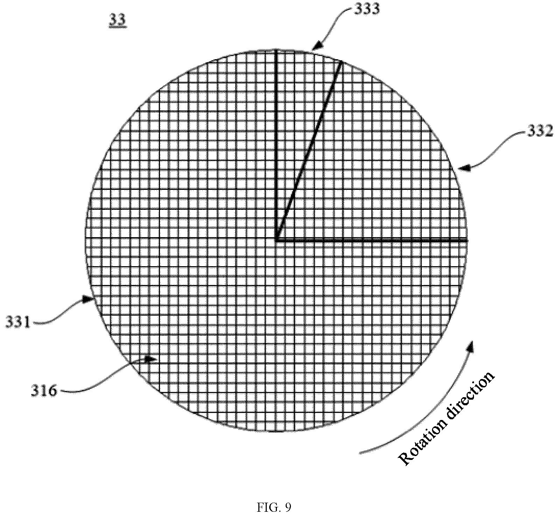

Referring to FIG. 4 and FIG. 9 together, according to some embodiments of this application, along the rotation direction of the secondary dehumidification rotor 33, the secondary dehumidification rotor 33 further includes a second cooling zone 333 located between the second regeneration zone 332 and the second moisture absorption zone 331, where the third process air passage 7 runs through the second cooling zone 333.

In this embodiment, the process air drawn through the third process air passage 7 first flows to the second cooling zone 333 of the secondary dehumidification rotor 33, and this portion of airflow absorbs heat from the second cooling zone 333. This can increase the temperature of the airflow directed to the third air intake position 25, thereby reducing the energy consumed to elevate the temperature of the regeneration air. This can also accelerate the cooling efficiency of the second cooling zone 333, and reduce the temperature difference between the airflow flowing to the second moisture absorption zone 331 and the second moisture absorption zone 331, thereby minimizing thermal offset and reducing energy waste.

Optionally, in some implementations, the indoor air passage 4 has a second return air passage 42 in communication with the third air intake position 25, and an air guide pipeline in communication with the third process air passage 7 and the second return air passage 42 may be provided, where the air guide pipeline is connected to the third air intake position 25, allowing the airflow in the second return air passage 42 to be mixed with the airflow in the third process air passage 7 and then flow to the third air intake position 25. The air guide pipeline can be designed to pass through the second cooling zone 333, eliminating the need for the third process air passage 7 and the second return air passage 42 to separately pass through the second cooling zone 333, thereby simplifying the structural design. Certainly, the third process air passage 7 and the second return air passage 42 may alternatively separately pass through the second cooling zone 333 before connected to the air guide pipeline.

Referring to FIG. 2, according to some embodiments of this application, the rotary dehumidification device 100 further includes an indoor air passage 4, where the indoor air passage 4 is in communication with the regeneration passage 2; and a connection position of the indoor air passage 4 and the regeneration passage 2 is located upstream of the first regeneration zone 312.

In this embodiment, relatively dry indoor air is utilized as regeneration air to perform drying and regeneration treatment on the first regeneration zone of the primary dehumidification rotor 31, and this portion of indoor air can be discharged outdoors through the moisture exhaust outlet 27 of the regeneration passage 2. In other words, the rotary dehumidification device 100 alone can introduce fresh air and expel indoor air to balance indoor air pressure and humidity, maintaining stable indoor air pressure and humidity without the need for additional indoor air exhaust systems. The application is convenient. Additionally, the indoor return air with low humidity can be reused. The indoor air has a certain temperature, reducing the energy consumed to elevate the temperature of the regeneration air.

Referring to FIG. 2, in some implementations, the dehumidification module 3 includes a secondary dehumidification rotor 33, and the regeneration passage 2 includes a first air intake position 23 located upstream of the first regeneration zone 312 and a third air intake position 25 located upstream of the third regeneration zone 332, where the indoor air passage 4 includes a first return air passage 41 and a second return air passage 42, the first return air passage 41 is in communication with the first air intake position 23, and the second return air passage 42 is in communication with the third air intake position 25.

In this embodiment, the regeneration air flowing to the second regeneration zone 332 for regeneration treatment of the second regeneration zone 332 originates from indoor air; and the indoor air passage 4 is provided with a first return air passage 41 connected to the first air intake position 23 and a second return air passage 42 connected to the third air intake position 25. Part of indoor air is directed to the first regeneration zone 312 through the first return air passage 41 for regeneration treatment of the first regeneration zone 312, and part of indoor air is directed to the second regeneration zone 332 through the second return air passage 42 for regeneration treatment of the second regeneration zone 332, improving the utilization of indoor air.

Optionally, the first return air passage 41 and the second return air passage 42 may be independent of each other, or may be connected to a same air intake passage. A control structure may be provided to control the volumes of air flowing from the air intake passage to the first return air passage 41 and the second return air passage 42. For example, regulating valves are respectively provided in the first return air passage 41 and the second return air passage 42, or a three-way valve is provided at the connection position of the air intake passage, the first return air passage 41, and the second return air passage 42, to adjust the volumes of air directed to the first air intake position 23 and the second air intake position 24 according to the dehydration regeneration requirements of the first regeneration zone 312 and the second regeneration zone 332. This ensures good regeneration effects for both the first regeneration zone 312 and the second regeneration zone 332, and also ensures full and efficient utilization of indoor air.

Referring to FIG. 2 and FIG. 9 together, according to some embodiments of this application, along the rotation direction of the secondary dehumidification rotor 33, the secondary dehumidification rotor 33 further includes a second cooling zone 333 located between the second regeneration zone 332 and the second moisture absorption zone 331, where the second return air passage 42 runs through the second cooling zone 333.

In this embodiment, the secondary dehumidification rotor 33 further includes a second cooling zone 333. It can be understood that after regeneration treatment of the second regeneration zone 332 using regeneration air, the temperature of the rotor in the second regeneration zone 332 rises. In this case, the second regeneration zone 332 is first rotated to the position of the second cooling zone 333, allowing this portion of the rotor to undergo a pre-cooling treatment, preventing excessively high temperature of this portion of the rotor from affecting the moisture absorption effect after it rotates to the second moisture absorption zone 331.

In this embodiment, the airflow in the second return air passage 42 absorbs heat from the second cooling zone 333. This can increase the temperature of the airflow in the second return air passage 42, thereby reducing the energy consumed to elevate the temperature of the regeneration air. This can also accelerate the cooling efficiency of the second cooling zone 333, and reduce the temperature difference between the airflow flowing to the second moisture absorption zone 331 and the second moisture absorption zone 331, thereby minimizing thermal offset and reducing energy waste.

Referring to FIG. 2, FIG. 4, and FIG. 5, according to some embodiments of this application, the indoor air passage 4 includes two return air passages, where one return air passage is in communication with the regeneration passage 2, and the other return air passage is in communication with the dehumidification passage 1.

In this embodiment, the indoor air passage 4 includes at least two return air passages, where one return air passage is configured to supply air to the regeneration passage 2, and the other return air passage is configured to supply air to the dehumidification passage 1. Low-humidity indoor air can be introduced into the dehumidification passage 1 to mix with the airflow in the dehumidification passage 1, increasing the airflow volume in the dehumidification passage 1. Indoor air can also be utilized to reduce the humidity of the airflow in the dehumidification passage 1.

For ease of explanation, the return air passage connected to the dehumidification passage 1 is referred to as a third return air passage 43. The third return air passage 43 may be connected upstream of the first moisture absorption zone 311, or may be connected downstream of the first moisture absorption zone 312.

In some implementations, the dehumidification module 3 includes a secondary dehumidification rotor 33, and the dehumidification passage 1 has a fourth connection position 16 located between the first moisture absorption zone 311 and the second moisture absorption zone 331. The third return air passage 43 may be in communication with the fourth connection position 16. In a case that a secondary dehumidification rotor 33 is provided, the connection position of the indoor air passage 4 and the regeneration passage 2 may be located between the first regeneration zone 312 and the second regeneration zone 332 or located upstream of the second regeneration zone 332, or a first return air passage 41 and a second return air passage 42 may be separately disposed, where the first return air passage 41 is connected between the first regeneration zone 312 and the second regeneration zone 332, and the second return air passage 42 is connected upstream of the second regeneration zone 332.

Referring to FIG. 2, according to some embodiments of this application, the rotary dehumidification device 100 further includes a fresh air passage 8, where the fresh air passage 8 is in communication with the regeneration passage 2, and along a flow direction of airflow in the regeneration passage 2, a connection position of the fresh air passage 8 and the regeneration passage 2 is located upstream of the first regeneration zone 312.

In this embodiment, the rotary dehumidification device 100 is provided with a fresh air passage 8. An airflow source in the regeneration passage 2 at least includes indoor return air introduced through the indoor air passage 4. Outdoor fresh air can be introduced to perform drying and regeneration on the first regeneration zone 312 of the primary dehumidification rotor 31, increasing the volume of regeneration air and improving the regeneration effect.

In some embodiments, a source of the airflow in the regeneration passage 2 may further include process air from the dehumidification passage 1. Both indoor return air and process air are relatively dry. Even if outdoor fresh air is introduced into the regeneration passage 2 as regeneration air, the humidity of the regeneration air mixed with indoor return air and process air is lower than the humidity of the outdoor fresh air. Therefore, even if outdoor fresh air is introduced as regeneration air, this does not cause excessive humidity in the regeneration air or affect the regeneration treatment of the first regeneration zone 312. Additionally, an airflow regulating valve 541 may be disposed in the fresh air passage 8 to reduce, when the humidity of outdoor fresh air is high, the opening degree of the fresh air passage 8 or close the fresh air passage 8 to reduce or stop introduction of fresh air, avoiding excessive humidity of the regeneration air.

Referring to FIG. 2, according to some embodiments of this application, the rotary dehumidification device 100 further includes an airflow regulating valve 541 disposed in the fresh air passage 8, where the airflow regulating valve 541 is configured to control a flow pass state of the fresh air passage 8.

In this embodiment, the flow pass state of the fresh air passage 8 refers to an open or closed state and an opening degree of the fresh air passage 8. The airflow regulating valve 541 is utilized to control the flow pass state of the fresh air passage 8, so as to select, according to demand, whether to introduce outdoor fresh air or control the amount of outdoor fresh air introduced, thereby enhancing usage flexibility. For example, when the humidity of outdoor fresh air is low, the fresh air passage 8 is opened to introduce outdoor fresh air for regeneration treatment of the first regeneration zone 312. When the humidity of outdoor fresh air is high, the opening degree of the fresh air passage 8 is reduced or the fresh air passage 8 is closed to reduce or stop introduction of fresh air, avoiding excessive humidity of the regeneration air.

Referring to FIG. 2 to FIG. 5, according to some embodiments of this application, the dehumidification module 3 further includes a condensation module disposed in the dehumidification passage 1.

In this embodiment, the condensation module may be disposed upstream of the primary dehumidification rotor 31, such as the first condensation module 32 in the embodiments above. The condensation module may alternatively be disposed downstream of the primary dehumidification rotor 31, such as a third condensation module 35 disposed near the exhaust outlet 12. Alternatively, as in the embodiments above, a second condensation module 34 is disposed between the primary dehumidification rotor 31 and the secondary dehumidification rotor 33. The condensation module can be utilized to cool the airflow in the dehumidification passage and cause the airflow to release condensed water, enhancing the dehumidification capability of the rotary dehumidification device.

For the implementations of the first condensation module 32 and the second condensation module 34, reference may be made to the embodiments above, and details are not repeated herein. The third condensation module 35 disposed near the exhaust outlet 12 may include one, two, or more surface coolers. The third condensation module 35 can be utilized to further condense and dehumidify the airflow before the airflow is discharged from the dehumidification passage 1 into the indoor environment, improving dehumidification efficiency and controlling the temperature of the airflow discharged indoors. Certainly, when further dehumidification and temperature regulation are not required, the third condensation module 35 may not be activated.

In some implementations, a refrigeration temperature of the third condensation module 35 is set to 3°C to 8°C, and may be set to 3°C, 4°C, 5°C, 5.5°C, 6°C, 7°C, 8°C, or any value between 3°C and 8°C, achieving a good cooling effect.

In some implementations, a heating module may be disposed upstream of the exhaust outlet 12, so as to utilize the heating module to heat the airflow when the temperature of the dehumidified airflow is low.

The above descriptions are merely example implementations of this application and are not intended to limit the patent scope of this application. Any equivalent structural transformations made under the technical concept of this application using the contents of the specification and drawings of this application, or direct/indirect applications in other related technical fields, fall within the patent protection scope of this application.

## Claims

1. A dehumidification rotor, **characterized in that** the dehumidification rotor has a moisture absorption zone and a regeneration zone arranged along a circumferential direction of the dehumidification rotor, wherein a regeneration temperature of the regeneration zone varies along the circumferential direction of the dehumidification rotor.

2. The dehumidification rotor according to claim 1, **characterized in that** the regeneration zone comprises multiple regeneration treatment zones arranged along the circumferential direction, wherein along a rotation direction of the dehumidification rotor, regeneration temperatures of the multiple regeneration treatment zones are set in a decreasing manner.

3. The dehumidification rotor according to claim 1 or 2, **characterized in that** the dehumidification rotor has a first surface and a second surface arranged back to back along an axial direction of the dehumidification rotor, wherein along a direction from the first surface to the second surface, pore sizes of mesopores of the dehumidification rotor are set in a decreasing manner; and
an air inlet end of the moisture absorption zone is located at the first surface, and an air inlet end of the regeneration zone is located at the second surface.

4. The dehumidification rotor according to claim 3, **characterized in that** the dehumidification rotor comprises a first adsorption layer and a second adsorption layer arranged in a stacked manner, wherein mesopores of the first adsorption layer are larger than mesopores of the second adsorption layer, and a thickness of the first adsorption layer is greater than a thickness of the second adsorption layer.

5. A rotary dehumidification device, **characterized by** comprising:
a dehumidification passage;
a regeneration passage, wherein the regeneration passage is branched to comprise multiple primary regeneration pipelines; and
a dehumidification module, wherein the dehumidification module comprises a rotatably arranged primary dehumidification rotor, the primary dehumidification rotor has a first moisture absorption zone and a first regeneration zone arranged along a circumferential direction of the primary dehumidification rotor, the first moisture absorption zone is located in the dehumidification passage, and the first regeneration zone is provided with multiple first regeneration treatment zones along the circumferential direction of the primary dehumidification rotor; wherein
the multiple primary regeneration pipelines are in one-to-one correspondence with the multiple first regeneration treatment zones, and regeneration air temperatures of at least two of the primary regeneration pipelines are different.

6. The rotary dehumidification device according to claim 5, **characterized in that** along a rotation direction of the primary dehumidification rotor, regeneration air temperatures of the multiple primary regeneration pipelines are set in a decreasing manner.

7. The rotary dehumidification device according to claim 5 or 6, **characterized in that** the primary dehumidification rotor has a first surface and a second surface arranged back to back along an axial direction of the primary dehumidification rotor; along a direction from the first surface to the second surface, mesopores of the primary dehumidification rotor are set in a decreasing manner; and
an air inlet end of the first moisture absorption zone is located at the first surface, and an air inlet end of the first regeneration zone is located at the second surface.

8. The rotary dehumidification device according to claim 7, **characterized in that** the primary dehumidification rotor comprises a first adsorption layer and a second adsorption layer arranged in a stacked manner, wherein mesopores of the first adsorption layer are larger than mesopores of the second adsorption layer, and a thickness of the first adsorption layer is greater than a thickness of the second adsorption layer.

9. The rotary dehumidification device according to any one of claims 5 to 8, **characterized in that** the rotary dehumidification device further comprises a first process air passage, wherein two ends of the first process air passage are respectively in communication with the dehumidification passage and the regeneration passage; and
a connection position of the first process air passage and the regeneration passage is located upstream of the first regeneration zone to guide part of process air from the dehumidification passage into the regeneration passage.

10. The rotary dehumidification device according to claim 9, **characterized in that** the dehumidification passage comprises a first connection position located upstream of the first moisture absorption zone, wherein the first process air passage is connected to the first connection position.

11. The rotary dehumidification device according to any one of claims 5 to 10, **characterized in that** the dehumidification module further comprises a secondary dehumidification rotor, wherein the secondary dehumidification rotor has a second moisture absorption zone and a second regeneration zone arranged along a circumferential direction of the secondary dehumidification rotor; and
along a flow direction of airflow in the dehumidification passage, the second moisture absorption zone is located downstream of the first moisture absorption zone.

12. The rotary dehumidification device according to claim 11, **characterized in that** the second regeneration zone comprises multiple second regeneration treatment zones arranged along the circumferential direction of the secondary dehumidification rotor, and the regeneration passage is provided with multiple secondary regeneration pipelines, wherein each secondary regeneration pipeline runs through one second regeneration treatment zone.

13. The rotary dehumidification device according to claim 12, **characterized in that** regeneration air temperatures of the multiple secondary regeneration pipelines are set in a decreasing manner along a rotation direction of the secondary dehumidification rotor.

14. The rotary dehumidification device according to claim 13, **characterized in that** along the rotation direction of the primary dehumidification rotor, the first regeneration treatment zone adjacent to the first moisture absorption zone is a first sub-zone; and
along the rotation direction of the secondary dehumidification rotor, the second regeneration treatment zone adjacent to the second moisture absorption zone is a second sub-zone, wherein an area of the first sub-zone does not exceed an area of the second sub-zone.

15. The rotary dehumidification device according to any one of claims 11 to 14, **characterized in that** mesopores in the secondary dehumidification rotor are smaller than at least some mesopores in the primary dehumidification rotor.

16. The rotary dehumidification device according to any one of claims 11 to 15, **characterized in that** a diameter of the secondary dehumidification rotor is larger than a diameter of the primary dehumidification rotor.

17. The rotary dehumidification device according to any one of claims 11 to 16, **characterized in that** a thickness of the secondary dehumidification rotor is smaller than a thickness of the primary dehumidification rotor.

18. The rotary dehumidification device according to any one of claims 11 to 17, **characterized in that** along a flow direction of airflow in the regeneration passage, the second regeneration zone is located upstream of the first regeneration zone.

19. The rotary dehumidification device according to any one of claims 11 to 18, **characterized in that** the dehumidification passage comprises a second connection position located downstream of the second moisture absorption zone; and
the rotary dehumidification device comprises a second process air passage connecting the second connection position and the regeneration passage, wherein a connection position of the second process air passage and the regeneration passage is located upstream of the second regeneration zone.

20. The rotary dehumidification device according to any one of claims 11 to 19, **characterized in that** the dehumidification passage comprises a third connection position located between the first moisture absorption zone and the second moisture absorption zone; and
the rotary dehumidification device further comprises a third process air passage connecting the third connection position and the regeneration passage, wherein a connection position of the third process air passage and the regeneration passage is located upstream of the second regeneration zone.

21. The rotary dehumidification device according to claim 20, **characterized in that** along the rotation direction of the secondary dehumidification rotor, the secondary dehumidification rotor further comprises a second cooling zone located between the second regeneration zone and the second moisture absorption zone, wherein the third process air passage runs through the second cooling zone.

22. The rotary dehumidification device according to any one of claims 5 to 21, **characterized in that** the regeneration passage further comprises a mixed air pipeline, wherein the multiple primary regeneration pipelines are in communication with an outlet end of the mixed air pipeline, and a first air intake position is disposed in the mixed air pipeline.

23. The rotary dehumidification device according to claim 22, **characterized in that** the rotary dehumidification device comprises a first heating structure disposed in the mixed air pipeline.

24. The rotary dehumidification device according to any one of claims 5 to 23, **characterized in that** the multiple primary regeneration pipelines comprise a first regeneration pipeline and a second regeneration pipeline sequentially arranged along the rotation direction of the primary dehumidification rotor;
wherein the rotary dehumidification device further comprises a second heating structure disposed in the first regeneration pipeline, and the second regeneration pipeline is not provided with a heating structure, or the second regeneration pipeline is provided with a third heating structure, wherein a heating power of the third heating structure is less than a heating power of the second heating structure.

25. The rotary dehumidification device according to any one of claims 5 to 24, **characterized in that** the dehumidification module further comprises a condensation module disposed in the dehumidification passage.
